(19) **Europäisches Patentamt / European Patent Office / Office européen des brevets**

(11) **EP 1 855 456 B1**

(12) **EUROPEAN PATENT SPECIFICATION**

(45) Date of publication and mention
of the grant of the patent:
**14.10.2009 Bulletin 2009/42**

(51) Int Cl.:
***H04M 9/08*** *(2006.01)*

(21) Application number: **06009468.7**

(22) Date of filing: **08.05.2006**

(54) **Echo reduction in time-variant systems**

Echoverringerung für zeitvariante Systeme

Annulation d'écho pour des systèmes à caractéristiques variables dans le temps

(84) Designated Contracting States:
**AT BE BG CH CY CZ DE DK EE ES FI FR GB GR
HU IE IS IT LI LT LU LV MC NL PL PT RO SE SI
SK TR**

(43) Date of publication of application:
**14.11.2007 Bulletin 2007/46**

(73) Proprietor: **Harman Becker Automotive Systems
GmbH
76307 Karlsbad (DE)**

(72) Inventors:
• **Haulick, Tim
89143 Blaubeuren (DE)**

• **Rössler, Martin
89077 Ulm (DE)**
• **Schmidt, Gerhard
89077 Ulm (DE)**

(74) Representative: **Grünecker, Kinkeldey,
Stockmair & Schwanhäusser
Anwaltssozietät
Leopoldstrasse 4
80802 München (DE)**

(56) References cited:
**US-A1- 2003 091 182     US-A1- 2004 018 860
US-A1- 2006 018 459     US-B1- 6 442 275**

EP 1 855 456 B1

## Description

### Field of the Invention

The present invention relates to a system and a method for signal processing, in particular, speech signal processing, with acoustic echo suppression. The invention particularly relates to echo suppression in loudspeaker-room-microphone systems exhibiting impulse responses that are time-dependent.

### Background of the Invention

Echo compensation is a basic topic in audio signal processing in communication systems comprising microphones that detect not only the desired signal, e.g., a speech signal of a user of a speech recognition system or a hands-free set, but also disturbing signals output by loudspeakers of the same communication system. In case of a hands-free set, e.g., it is not desired that signals received from a remote party and output by loudspeakers at the near end are fed again in the system by microphones at the near end and transmitted back to the remote party. Detection of signals by the microphones that are output by the loudspeakers can result in annoying acoustic echoes that even may cause a complete breakdown of the communication, if the acoustic echoes are not significantly attenuated or substantially removed.

In the case of a speech recognition system or a speech dialog system used in a noisy environment a similar problem occurs. It has to be prevented that signals different from the speech signals of a user are supplied to the recognition unit. The microphone(s) of the speech dialog system, however, might detect loudspeaker outputs representing, e.g., synthesized speech signals output by a speech dialog system or audio signals reproduced by audio devices as CD or DVD player or a radio. If these signals were not sufficiently suppressed in the microphone signal, the wanted signal representing the utterance of a user could be deteriorated to a degree that renders appropriate speech recognition impossible.

Echo suppression is particularly difficult, if the speaker using a microphone for communication with a remote communication party is moving as, e.g., a driver using a hands-free set who steers a wheel while communicating with a remote party by the hands-free telephone set. In this case, the impulse response of the loudspeaker-room-microphone (LRM) system is time-variant. Usually residual echoes are still present in the processed audio signals to be provided to a remote communication party. These residual echoes, e.g., result in so-called echo blips in hands-free telephone systems thereby deteriorating the microphone signal significantly, in particular, due to the huge delay of current mobile phone connections.

Several methods for echo compensation have been proposed and implemented in communication systems in recent years. Adaptive filters are employed for echo compensation of acoustic signals (see, e.g., Acoustic Echo and Noise Control, E. Hänsler and G. Schmidt, John Wiley & Sons, New York, 2004) that are used to model the transfer function of the LRM system by means of an adaptive finite impulse response. (FIR) filter. If multiple loudspeaker signals are output by a number of loudspeakers separately, one filter has to be employed for each loudspeaker.

US 2004/0018860 A1 discloses a method for echo suppression wherein a spectral shaper is provided for estimating the acoustic echo component when the speech activity is low or zero. The echo reducing system for hands-free communication also disclosed in D1 comprises a speech detector receiving a microphone signal and a linear echo canceller for subtracting an estimated echo from a microphone. The speech detector receives outputs from the subtractor and the echo canceller.

In present echo compensation processing an adaptive filter is used to model the impulse response of the LRM system to generate an estimate for the echo signal that can be subtracted from the microphone signal. The adaptation of the echo compensation filtering means is usually carried out by the normalized least mean square (NLMS) algorithm.

However, the echo compensation is a rather time-consuming and processor intensive procedure and usually is restricted to some portion of the impulse response of the LRM system. Thus, echo compensation is often supplemented by suppression of residual echoes by means of filtering the microphone signal after subtraction of the estimated echo signal with an appropriate time-varying impulse response. This supplementary filtering is usually performed in a restricted sub-band or some restricted Fast Fourier Transform (FFT) range bey some version of a Wiener filter.

However, current echo reduction processing is still not reliable, in particular, in LRM systems that show time-varying impulse responses. Thus, despite the engineering process in recent years there is still a problem in satisfying echo reduction of audio signal, in particular, speech signals in communication system, e.g., in hands-free telephone sets and speech dialog systems.

### Description of the Invention

The above-mentioned problem is solved by two alternative methods according to claims 1 and 8, respectively.

According to claim 1 it is provided a method for reducing an echo in a microphone signal generated by a microphone, comprising echo compensating the microphone signal by subtracting an estimated echo signal from the microphone signal to generate an echo compensated signal; detecting a speech activity of a local speaker on the basis of the microphone signal and the estimated echo signal; and suppressing a residual echo in the echo compensated signal on the basis of the detected speech activity to obtain an output signal, wherein the microphone signal is converted to sub-band microphone signals and the estimated echo signal comprises estimated sub-band echo signals and wherein the echo compensating, detecting of the speech activity and suppressing of the residual echo is carried out in the sub-band regime and wherein the detecting of the speech activity of the local speaker comprises the steps of: smoothing in frequency the microphone sub-band signals, in particular, by first order recursive filtering; smoothing in frequency the estimated sub-band echo signals, in particular, by first order recursive filtering; determining for each sub-band of a predetermined range of sub-bands a distance between the smoothed microphone sub-band signals and the smoothed estimated sub-band echo signals; and wherein

the suppressing of the residual echo in the echo compensated signal is based on the determined distances in each sub-band of the predetermined range of sub-bands.

According to claim 8 it is provided a method for reducing an echo in a microphone signal generated by a microphone, comprising echo compensating the microphone signal by subtracting an estimated echo signal from the microphone signal to generate an echo compensated signal; detecting a speech activity of a local speaker on the basis of the microphone signal and the estimated echo signal; and suppressing a residual echo in the echo compensated signal on the basis of the detected speech activity to obtain an output signal, wherein the microphone signal is converted to Fourier transformed microphone signals and the estimated echo signal comprises estimated Fourier transformed echo signals and wherein the echo compensating, detecting of the speech activity and suppressing of the residual echo is carried out in the Fourier regime and wherein the detecting of the speech activity of the local speaker comprises the steps of: smoothing in frequency the microphone Fourier transformed signals, in particular, by first order recursive filtering; smoothing in frequency the estimated Fourier transformed echo signals, in particular, by first order recursive filtering; determining for each Fourier component of a predetermined range of Fourier components a distance between the smoothed microphone Fourier transformed signals and the smoothed estimated Fourier transformed echo signals; and wherein the suppressing of the residual echo in the echo compensated signal is based on the determined distances in each Fourier component of the predetermined range of Fourier components.

Echo compensating is carried out by an adaptive echo compensation filtering means that models the loud-speaker-room-microphone system transfer by an impulse response. The impulse response given by $N_{\hat{h}}$, filter coefficients $\hat{h}_i(n)$, where n is the discrete time index, is folded with the audio signal x(n) to obtain an estimated echo signal

$$\hat{d}(n) = \sum_{i=0}^{N_{\hat{h}}-1} x(n-i)\hat{h}_i(n)$$

that is to be subtracted from the microphone signal. This microphone signal may, in general, include a speech signal from a local speaker using the microphone and background noise in addition to the echo resulting from a loudspeaker output, e.g., based on a speech signal received from a remote speaker. The adaptation of the adaptive echo compensation filtering means can be carried out by the normalized least mean square (NLMS) algorithm.

After echo compensation some residual echo is still present in the echo compensated microphone signal. According to the present invention this residual echo is suppressed in dependence on the result of a detection of speech activity of a local speaker that uses the microphone for the communication.

Speech activity is detected by analyzing the microphone signal and the estimated echo signal. If, e.g., the local speaker is silent, a relatively strong residual echo suppression can be carried out by a residual echo suppressing means. On the other hand, a different characteristic of the residual echo suppressing means is preferred when utterances of the local speaker are detected. Therefore, a very satisfying echo suppression of audio signals, in particular, speech signals in communication system, e.g., in hands-free telephone sets, speech recognition systems and speech dialog systems, is achieved.

It is noted that the herein disclosed signal processing can be carried out in the sub-band or the Fourier transform regime. In the following description of aspects of the present invention signal processing in the sub-band regime is described. It is understood that a corresponding processing in the Fourier regime after Fourier transform may alternatively be carried out.

For processing in the sub-band regime the microphone signal is converted by filter banks to sub-band microphone signals and the estimated echo signal comprises estimated sub-band echo signals. In this case, the echo compensating, detecting of speech activity (speaker is silent or is speaking) and suppressing of residual echo is carried out in the sub-band regime. After suppression of the residual echo in the sub-bands a synthesizing filter bank can be used to synthesize the desired output signal, which, e.g., is to be transmitted to a remote communication party, from the output sub-band signals.

According to claim 1 the herein disclosed method the detecting of the speech activity of the local speaker comprises the steps of:

smoothing in frequency the microphone sub-band signals, in particular, by first order recursive filtering;

smoothing in frequency the estimated sub-band echo signals, in particular, by first order recursive filtering;

determining in each sub-band of a predetermined range of sub-bands a distance between the smoothed microphone sub-band signals and the smoothed estimated sub-band echo signals;

and wherein

the suppressing of the residual echo in the echo compensated signal is based on the determined distances in each sub-band of the predetermined range of sub-bands.

The sub-band microphone signals $Y(e^{j\Omega_\mu}, n)$ as well as the estimate for the echo signal in each sub-band $\hat{D}(e^{j\Omega_\mu}, n)$ are smoothed in frequency over a predetermined range M of sub-bands $\mu = 0, M - 1$:

$$S_{\hat{d}\hat{d}, smooth}(\Omega_\mu, n) = \mathsf{smooth}\left[\hat{D}(e^{j\Omega_0}, n), \hat{D}(e^{j\Omega_1}, n), ..., \hat{D}(e^{j\Omega_{M-1}}, n)\right]$$

$$S_{yy, smooth}(\Omega_\mu, n) = \mathsf{smooth}\left[Y(e^{j\Omega_0}, n), Y(e^{j\Omega_1}, n), ..., Y(e^{j\Omega_{M-1}}, n)\right]$$

where $\Omega_\mu$ denotes the mid-frequency of the sub-band $\mu$ and "smooth" indicates some kind of a proper smoothing function. The pre-determined range of sub-bands may preferably cover 200 Hz to 3500 Hz. This range, generally, shows a significant power for speech signals. For example, the magnitude or the square of the magnitude of the sub-band microphone signals and of the estimated echo sub-band signals may be smoothed in both the positive ($\Omega_0$ to $\Omega_{M-1}$) and negative ($\Omega_{M-1}$ to $\Omega_0$) direction in frequency.

Suppressing the residual echo in the echo compensated signal in dependence on some distance measures or differences of the smoothed microphone sub-band signals and the estimated echo sub-band signals, e.g., differences of the respective magnitudes, in each sub-band of the predetermined range of sub-bands provides an efficient and satisfying manner to suppress residual echoes on the basis of the detected speech activity to obtain an output signal with an enhanced quality.

According to one advantageous embodiment of the inventive method for reducing an echo in a microphone signal the power density spectrum of some background noise present in the microphone signal is estimated in sub-bands; and

smoothing in frequency of the microphone sub-band signals comprises recursive filtering the power density spectrum of the sub-band microphone signals to obtain a smoothed power density spectrum of the microphone sub-band signals;

smoothing in frequency the estimated sub-band echo signals comprises recursive filtering the power density spectrum of the estimated sub-band echo signals to obtain a smoothed power density spectrum of the estimated sub-band echo signals;

and wherein

determining in each sub-band a distance between the smoothed microphone sub-band signals and the smoothed sub-band echo signals comprises

determining in each sub-band the maximum of the smoothed power density spectrum of the microphone sub-band signals and the estimated background noise power spectrum enhanced by a first predetermined noise overestimate factor to obtain a modified microphone power density spectrum;

determining in each sub-band the maximum of the smoothed power density spectrum of the estimated sub-band echo signals and the estimated background noise power spectrum enhanced by a second predetermined noise overestimate factor, which may be the same as the first one, to obtain a modified echo power density spectrum;

comparing the modified microphone power density spectrum and the modified echo power density spectrum to obtain a spectrum distance measure;

and wherein

the suppressing of the residual echo in the echo compensated sub-band signals is based on the spectrum distance measure.

In this embodiment smoothing is carried out by

$$\widetilde{S}_{\hat{d}\hat{d},smooth}(\Omega_0,n) = \frac{1}{2}\left[\left|\hat{D}(e^{j\Omega_0},n)\right|^2 + \left|\hat{D}(e^{j\Omega_1},n)\right|^2\right]$$

and

$$\widetilde{S}_{\hat{d}\hat{d},smooth}(\Omega_\mu,n) = \lambda_{Fre}\widetilde{S}_{\hat{d}\hat{d},smooth}(\Omega_{\mu-1},n) + (1-\lambda_{Fre})\left|\hat{D}(e^{j\Omega_\mu},n)\right|^2, \text{ for } 0 < \mu < M.$$

in the positive direction and

$$S_{\hat{d}\hat{d},smooth}(\Omega_{M-1},n) = \frac{1}{2}\left[\widetilde{S}_{\hat{d}\hat{d},smooth}(\Omega_{M-2},n) + \widetilde{S}_{\hat{d}\hat{d},smooth}(\Omega_{M-1},n)\right]$$

$$S_{\hat{d}\hat{d},smooth}(\Omega_\mu,n) = \lambda_{Fre}S_{\hat{d}\hat{d},smooth}(\Omega_{\mu+1},n) + (1-\lambda_{Fre})\widetilde{S}_{\hat{d}\hat{d},smooth}(\Omega_\mu,n), \text{ for } 0 \leq \mu < M-1$$

in the negative direction. $S_{\hat{d}\hat{d},smooth}(\Omega_\mu,n)$ is the smoothed power density spectrum of the estimated sub-band echo signals. Smoothing of the sub-band microphone signals $Y(e^{j\Omega_\mu},n)$ is performed accordingly to obtain the smoothed power density spectrum of the sub-band microphone signals $S_{yy,}mod(\Omega_\mu,n)$. Experiments have shown that, e.g., for a typical sampling rate of 11025 Hz and M = 256 sub-bands the smoothing parameter $\lambda_{Fre}$ is advantageously chosen as $0.2 \leq \lambda_{Fre} \leq 0.8$.

After the smoothing process the maximum values of the respective smoothed spectra and the power density spectrum of background noise (in sub-bands) are calculated for the sub-bands to obtain a modified microphone power density spectrum and a modified echo power density spectrum

$$S_{\hat{d}\hat{d},mod}(\Omega_\mu,n) = \max\left\{S_{\hat{d}\hat{d},smooth}(\Omega_\mu,n), K_b\hat{S}_{bb}(\Omega_\mu,n)\right\}$$

and

$$S_{yy,mod}(\Omega_\mu,n) = \max\left\{S_{yy,smooth}(\Omega_\mu,n), K_b\hat{S}_{bb}(\Omega_\mu,n)\right\}.$$

Experiments have shown that the noise overestimate factor $K_b$ may, e.g., be chosen as $2 \leq K_b \leq 16$. It might be preferred that different noise overestimate factors are chosen for the modified microphone power density and the modified echo power density. Comparison of the modified spectra provides some spectrum distance measure that can advantageously be used for the controlling of the suppressing of the residual echo. As a result, an output signal with a previously unknown echo reduction can be achieved. The method of this embodiment has proven to be particularly reliable and efficient for echo reduction in a time-variant loudspeaker-room-microphone (LRM) system. One specific example for the comparison of the modified spectra is given in the detailed description of the embodiment below.

According to one example of the inventive method estimating the power density of the echo compensated signal and estimating the power density of the residual echo is carried out. In this case, the suppressing of the residual echo in the echo compensated signal is based on the estimated power density of the echo compensated signal and the estimated power density of the residual echo. The power densities are given by the squares of the magnitudes of the respective signals.

If, e.g., the estimated power density of the echo compensated signal greatly exceeds the estimated power density of the residual echo, suppression of the residual echo might be very faint in order not to modify the already intelligible microphone signal too much. If, on the other hand, the estimated power density of the residual echo exceeds the estimated power density of the echo compensated signal a more aggressive filtering of the echo compensated signal is necessary.

The suppressing of the residual echo in the echo compensated signal may comprise filtering the echo compensated signal by a filter with the filter characteristic (frequency response)

$$G(e^{j\Omega_\mu}, n) = 1 - \beta(n)\frac{\hat{S}_{\varepsilon\varepsilon}(\Omega_\mu, n)}{\hat{S}_{ee}(\Omega_\mu, n)}$$

where $\hat{S}_{ee}(\Omega_\mu, n)$ and $\hat{S}_{\varepsilon\varepsilon}(\Omega_\mu, n)$ denote the estimated power density of the echo compensated signal and the estimated power density of the residual echo and $\beta(n)$ is a filter parameter depending on the detected speech activity. If speech activity, e.g., measured by a spectrum distance measure as mentioned above exceeding some predetermined detection threshold, is detected, $\beta(n)$ is high, e.g., about $\beta(n) = 1000$ and otherwise it is low, e.g., $\beta(n) = 1$. In particular, the $\beta(n)$ is a time-dependent parameter to account for a time-variant LRM system.

One may also prefer to limit the suppression to a pre-determined value given by $G_{\min}$, i.e.

$$G(e^{j\Omega_\mu}, n) = \max\left\{G_{\min}, 1 - \beta(n)\frac{\hat{S}_{\varepsilon\varepsilon}(\Omega_\mu, n)}{\hat{S}_{ee}(\Omega_\mu, n)}\right\}.$$

Experiments have proven that the shown filter characteristic is very efficient in suppressing residual echoes in already echo compensated microphone signals in dependence on detected speech activity of a local speaker using the microphone that generates the microphone signal that is to be improved in quality before transmission to a remote communication party.

According to an even more efficient but somewhat more complicated filtering of the echo compensated signal for suppressing a residual echo in the echo compensated signal the filter characteristic might be chosen as

$$G(e^{j\Omega_\mu}, n) = \begin{cases} 1 - \beta(n)\dfrac{\hat{S}_{\varepsilon\varepsilon}(\Omega_\mu, n)}{\hat{S}_{ee}(\Omega_\mu, n)}, & \text{if } \overline{C}(n) > C_{\text{thres}} \\[4mm] 1 - \beta(n)\dfrac{\max\left\{\hat{S}_{\varepsilon\varepsilon}(\Omega_\mu, n), \left|\hat{D}(e^{j\Omega_\mu}, n)\right|^2\right\}}{\hat{S}_{ee}(\Omega_\mu, n)}, \end{cases}$$

or as

$$G(e^{j\Omega_\mu},n) = \begin{cases} 1 - \beta(n)\dfrac{\hat{S}_{ee}(\Omega_\mu,n)}{\hat{S}_{ee}(\Omega_\mu,n)}, & \text{if } \overline{C}(n) > C_{\text{thres}} \\[2em] 1 - \beta(n)\dfrac{\left|\hat{D}(e^{j\Omega_\mu},n)\right|^2}{\hat{S}_{ee}(\Omega_\mu,n)}, & \text{else} \end{cases}$$

where $\overline{C}(n)$ is a measure for the detected speech activity and $C_{\text{thres}}$ is a predetermined threshold. For example, $\overline{C}(n)$ may be a time-averaged spectrum distance measure. Again suppression may be limited to a pre-determined value $G_{\min}$ as mentioned above.

In a further example of the inventive method the power density of the output signal after echo compensation and echo suppression processing as described above and the power density of background noise present in the microphone signal are determined and compared. If the power density of the background noise exceeds the power density of the output signal, artificial noise (so-called comfort noise) is transmitted to a remote communication party instead of the output signal that may usually be transmitted to the remote party. By this, it is avoided that residual echo suppression even suppresses background noise detected by the microphone which would result in annoying abrupt changes in the background noise level received by the remote communication party.

The present invention also provides a computer program product, comprising one or more computer readable media having computer-executable instructions for performing the steps of the herein disclosed method according to one of the above described examples.

The above mentioned problems are also solved by the system for processing a microphone signal generated by a microphone according to claim 10, comprising an echo compensation filtering means configured to receive and echo compensate the microphone signal to output an echo compensated signal based on the received microphone signal; a speech activity detection means configured to detect speech activity of a local speaker by receiving and analyzing the echo compensated signal and to output a detection signal; a residual echo suppressing means configured to receive the detection signal and to receive and filter the echo compensated signal on the basis of the detection signal to output an output signal; filter banks configured to convert the microphone signal and another audio signal to be output by at least one loudspeaker installed in the same room as the microphone; a background noise estimation means configured to estimate the background noise power spectrum of background noise present in the microphone signal, and wherein the speech activity detection means comprises a recursive filtering means configured to smooth the power density spectrum of sub-band microphone signals to obtain a smoothed power density spectrum of the microphone sub-band signals; a recursive filtering means configured to smooth the power density spectrum of estimated sub-band echo signals to obtain a smoothed power density spectrum of the estimated sub-band echo signals; a determining means configured to determine in each sub-band the maximum of the smoothed power density spectrum of the microphone sub-band signals and the estimated background noise power spectrum enhanced by a predetermined noise overestimate factor and to generate a modified microphone power density spectrum of the determined maximum values; a determining means configured to determine in each sub-band the maximum of the smoothed power density spectrum of the estimated sub-band echo signals and the estimated background noise power spectrum enhanced by the predetermined noise overestimate factor and to generate a modified echo power density spectrum of the determined maximum values; and a comparing means configured to compare the modified microphone power density spectrum and the modified echo power density spectrum and to generate a spectrum distance signal; and wherein the residual echo suppressing means is configured to receive the spectrum distance signal and to receive and filter the echo compensated signal on the basis of the spectrum distance signal.

In an alternative embodiment it is provided a system for processing a microphone signal generated by a microphone, comprising an echo compensation filtering means configured to receive and echo compensate the microphone signal to output an echo compensated signal based on the received microphone signal; a speech activity detection means configured to detect speech activity of a local speaker by receiving and analyzing the echo compensated signal and to output a detection signal; a residual echo suppressing means configured to receive the detection signal and to receive and filter the echo compensated signal on the basis of the detection signal to output an output signal; Fourier transform means configured to Fourier transform the microphone signal and another audio signal to be output by at least one loudspeaker installed in the same room as the microphone; a background noise estimation means configured to estimate the background noise power spectrum of background noise present in the microphone signal, and wherein the speech activity detection means comprises a recursive filtering means configured to smooth the power density spectrum of Fourier transformed microphone signals to obtain a smoothed power density spectrum of the microphone Fourier transformed signals; a recursive filtering means configured to smooth the power density spectrum of estimated Fourier transformed echo signals to obtain a smoothed power density spectrum of the estimated Fourier transformed echo signals; a determining means configured to determine in each Fourier component the maximum of the smoothed power density spectrum of the microphone Fourier transformed signals and the estimated background noise power spectrum enhanced by a predetermined noise overestimate factor and to generate a modified microphone power density spectrum of the determined maximum values; a determining means configured to determine in each Fourier component the maximum of the smoothed power density spectrum of the estimated Fourier transformed echo signals and the estimated background noise power spectrum enhanced by the predetermined noise overestimate factor and to generate a modified echo power density spectrum of the determined maximum values; and a comparing means configured to compare the modified microphone power density spectrum and the modified echo power density spectrum and to generate a spectrum distance signal; and wherein the residual echo suppressing means is configured to receive the spectrum distance signal and to receive and filter the echo compensated signal on the basis of the spectrum distance signal.

In the above examples of the inventive system the speech activity detection means can be configured to estimate the power density of the echo compensated signal and the power density of a residual echo present in the echo compensated signal; and the residual echo suppressing means can be configured to suppress the residual echo in the echo compensated signal based on the estimated power density of the echo compensated signal and the estimated power density of the residual echo.

The residual echo suppressing means may advantageously comprise a filtering means with one of the following filter characteristic

$$G(e^{j\Omega_\mu},n) = 1 - \beta(n)\frac{\hat{S}_{\varepsilon\varepsilon}(\Omega_\mu,n)}{\hat{S}_{ee}(\Omega_\mu,n)}$$

or

$$G(e^{j\Omega_\mu},n) = \begin{cases} 1 - \beta(n)\dfrac{\hat{S}_{\varepsilon\varepsilon}(\Omega_\mu,n)}{\hat{S}_{ee}(\Omega_\mu,n)}, & \text{if } \overline{C}(n) > C_{\text{thres}} \\[4mm] 1 - \beta(n)\dfrac{\max\left\{\hat{S}_{\varepsilon\varepsilon}(\Omega_\mu,n), \left|\hat{D}(e^{j\Omega_\mu},n)\right|^2\right\}}{\hat{S}_{\varepsilon\varepsilon}(\Omega_\mu,n)}, & \text{else} \end{cases}$$

or

$$G(e^{j\Omega_\mu},n) = \begin{cases} 1 - \beta(n)\dfrac{\hat{S}_{\varepsilon\varepsilon}(\Omega_\mu,n)}{\hat{S}_{ee}(\Omega_\mu,n)}, & \text{if } \overline{C}(n) > C_{\text{thres}} \\[4mm] 1 - \beta(n)\dfrac{\left|\hat{D}(e^{j\Omega_\mu},n)\right|^2}{\hat{S}_{ee}(\Omega_\mu,n)}, & \text{else} \end{cases}$$

where the mid-frequency of the sub-band $\mu$ is denoted by $\Omega_\mu$, $\hat{S}_{ee}(\Omega_\mu,n)$, $\hat{S}_{\varepsilon\varepsilon}(\Omega_\mu,n)$ denote the estimated power density of the echo compensated signal and the estimated power density of the residual echo, n is the discrete time index and $\beta(n)$ is a filter parameter depending on the detected speech activity, and where $\overline{C}(n)$ is a measure for the detected speech activity and $C_{\text{thres}}$ is a predetermined threshold.

The filter characteristic of the residual echo filtering means my alternatively be limited by replacing one of the above mentioned characteristics by max[$G_{min}$, $G(e^{j\Omega_\mu}, n)$] with some pre-determined value $G_{min}$.

The system may further comprise a noise generator configured to generate artificial noise;

a means configured to determine the power density of the output signal and of background noise present in the microphone signal;

a means configured to compare the power density of the output signal with the power density of the background noise; and

a control means configured to cause transmission of the output signal to a remote party, if the power density of the output signal exceeds the power density of the background, and to cause transmission of the generated artificial noise, noise if the power density of the background noise exceeds the power density of the output signal.

Thus, the desired signal that is, e.g., to be transmitted to the remote communication party or to be recognized by a speech recognition system, may be composed of the sub-band signals

$$\hat{S}(e^{j\Omega_\mu}, n) = \begin{cases} E(e^{j\Omega_\mu}, n)G(e^{j\Omega_\mu}, n), & \text{if no comfort noise is to be output} \\ B(e^{j\Omega_\mu}, n), & \text{if comfort noise only is to be output} \end{cases}$$

where $E(e^{j\Omega_\mu}, n)$ and $B(e^{j\Omega_\mu}, n)$ denote the echo compensated signal and the artificial noise signal (in sub-bands).

It is also provided a hands-free telephone set comprising one of the above described examples of a system for processing a microphone signal. The above described examples are particular useful for enhancing the quality of a speech signal transmitted by a hands-free set to a remote communication party. In particular, the intelligibility of the transmitted signal processed for echo compensation and echo suppression as disclosed above is enhanced with respect to the prior art when the LRM system temporarily changes. In this context, a vehicle communication system is provided comprising at least one microphone, at least one loudspeaker and the system according to one of the examples above or the mentioned hands-free telephone set. The disclosed system is particularly efficient in reducing echoes in situations in which a speaker driving a car is moving, e.g., due to steering a wheel.

The present invention furthermore provides a speech recognition system or a speech dialog system comprising the system according to one of the above examples. The reliability of recognition results of speech inputs processed by an example of the inventive system is greatly enhanced as compared to the art.

Additional features and advantages of the invention will be described in detail with reference to the drawings. In the description, reference is made to the accompanying figures that are meant to illustrate preferred embodiments of the invention. It is understood that such embodiments do not represent the full scope of the invention that is defined by the claims given below.

Figure 1 shows the structure of an echo reduction system for enhancing the quality of a microphone signal generated on the basis of a speech signal, a loudspeaker signal and background noise detected by a microphone.

Figure 2 illustrates an example of the detection of speech activity that represents an important element of the disclosed echo reduction processing.

Figure 3 shows basic elements of the suppression of a residual echo in an echo compensated microphone signal comprising detection speech activity and adaptation of a filter characteristic of a residual echo suppressing means.

Figure 4 shows a result of a simulation experiment for the disclosed echo reduction processing of a microphone signal.

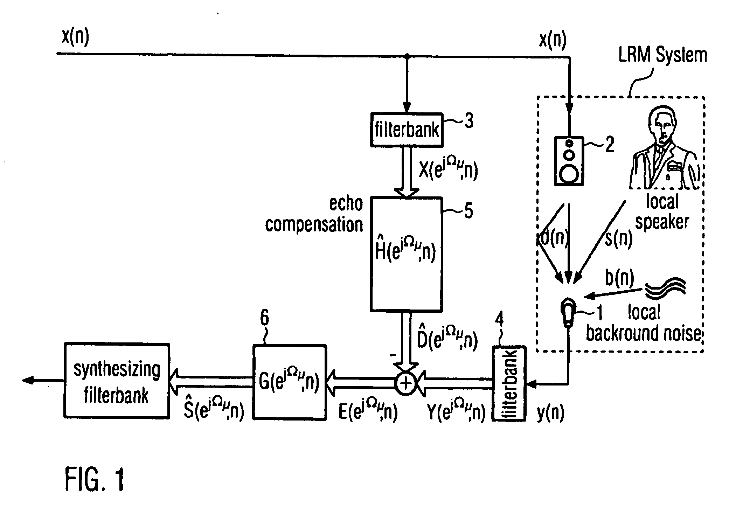

In the following, an example of the signal processing (system) disclosed in this application is described in detail with respect to Figs. 1 to 3. As shown in Fig. 1 a telephony hands-free set comprises a microphone 1 and a loudspeaker 2. Utterances of a local speaker are detected by the microphone 1 and the loudspeaker 2 generates a loudspeaker signal based on an audio signal x(n) provided by a remote communication party.

The microphone not only detects the speech signal s(n) of a locate speaker but also a background noise signal b(n) and the loudspeaker-room-microphone (LRM) transfer signal d(n) based on the impulse response of the LRM system h(n). The microphone signal y(n), thus, includes contributions of the speech signal s(n), the background noise signal b(n) and the echo signal d(n).

By n the discrete time index is denoted. In this example, echo compensation and residual echo suppression performed by signal processing in sub-bands is described. Alternatively, processing in the frequency range (Fast Fourier Transform range) can be performed after Fourier transforming the respective audio signal x(n) and the microphone signal y(n).

A first filter bank means 3 generates sub-band signals $X(e^{j\Omega_\mu},n)$ from the audio signal x(n) and sub-band signals $Y(e^{j\Omega_\mu},n)$ from the microphone signal y(n). The mid-frequency of the sub-band $\mu$ is denoted by $\Omega_\mu$. The audio sub-band signals $X(e^{j\Omega_\mu},n)$ are filtered by an adaptive echo compensation filtering means 5. The filter coefficients of the echo compensation filtering means 5 are determined in order to model the impulse response h(n) in the sub-bands. An estimate for the echo signal in each sub-band $D(e^{j\Omega_\mu},n)$ is obtained by folding the audio sub-band signals $X(e^{j\Omega_\mu},n)$ with the impulse response of the echo compensation filtering means in each sub-band $H(e^{j\Omega_\mu},n)$.

By subtracting the estimated echo $\hat{D}(e^{j\Omega_\mu},n)$ from the sub-band microphone signals $Y(e^{j\Omega_\mu},n)$ echo compensated signals in each sub-band $E(e^{j\Omega_\mu},n)$ are obtained. The echo compensated signals $E(e^{j\Omega_\mu},n)$ are further processed for suppression of residual echoes by a residual echo reduction means 6. The residual echo reduction means 6 may comprise or be supplemented with a noise reduction means for substantially removing the background noise contribution of the echo compensated signals $E(e^{j\Omega_\mu},n)$. The sub-band output signals $\hat{S}(e^{j\Omega_\mu},n)$ obtained by the residual echo reduction means 6 can subsequently by synthesized to obtain a desired signal composed of the sub-band signals that can be transmitted to a remote communication party.

The present invention is mainly concerned with the realization of the residual echo reduction means 6. It is known in the art to simply employ some variant of a Wiener filter making use of the estimated power density spectrum of the residual echo $\hat{S}_{\varepsilon\varepsilon}(\Omega_\mu,n)$ and of the echo compensated sub-band signals $\hat{S}_{ee}(\Omega_\mu,n)$. The Wiener filter may exhibit the following filter characteristic

$$G(e^{j\Omega_\mu},n) = \max\left\{G_{\min}, 1 - \beta\frac{\hat{S}_{\varepsilon\varepsilon}(\Omega_\mu,n)}{\hat{S}_{ee}(\Omega_\mu,n)}\right\}$$

wherein the maximum damping can be pre-determined by the parameter $G_{\min}$ and the sensibility of the filter is controlled by the parameter $\beta$. If $\beta > 1$ the damping might by too strong, thereby damping also the desired signal below an appropriate level.

According to the present invention the filter characteristic (frequency response) of an employed residual echo filtering means can be adjusted such that a very sensitive ("aggressive") damping is carried out when no speech activity of the local speaker is detected. The inventive method secures that the detection of speech activity is satisfying even when the speaker is moving. In particular, the herein disclosed method is able to distinguish between speech signals of a local speaker and output by a loud-speaker (i.e. provided by a remote speaker) in a time-variant LRM system. The filter characteristic of a residual echo reduction means can then be adapted on the basis of the detected speech activity of the local speaker.

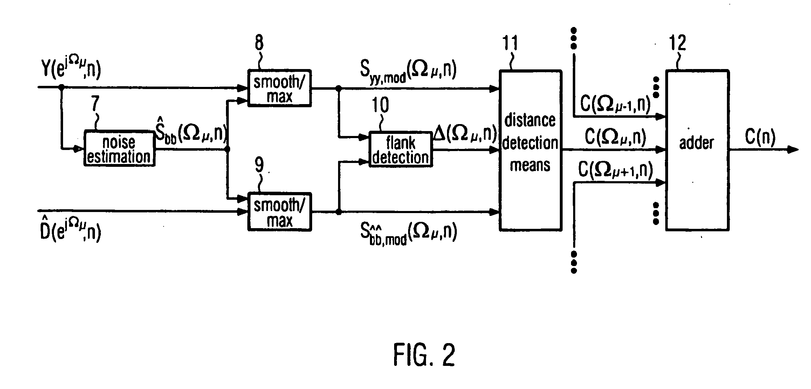

An example for the detection of speech activity according to the present invention is illustrated in Fig. 2. A noise estimating means 7 receives the sub-band microphone signals $Y(e^{j\Omega_\mu},n)$ in order to estimate the power density spectrum $\hat{S}_{bb}(\Omega_\mu,n)$ (in sub-bands) of the background noise b(n) detected by the microphone 1. The noise estimating means 7 may, e.g., make use of a minimum statistics in order to estimate the power density spectrum $\hat{S}_{bb}(\Omega_\mu,n)$ (see, e.g., An Efficient Algorithm to Estimate the Instantaneous SNR of Speech Signals, R. Martin, EUROSPEECH 1993, Berlin, Conf. Proceed., p. 1093 - 1096, September 1993).

The sub-band microphone signals $Y(e^{j\Omega_\mu},n)$ as well as the estimate for the echo signal in each sub-band $\hat{D}(e^{j\Omega_\mu},n)$ are smoothed 8, 9 in frequency over the predetermined M sub-bands $\mu = 0, M - 1$.

A particular efficient smoothing function can be realized by a recursive filter of $1^{st}$ order for smoothing the magnitudes or the squares of the magnitudes in positive an negative direction of the frequency range. According to the present example smoothing is carried according to

$$\widetilde{S}_{\hat{d}\hat{d},smooth}(\Omega_0,n) = \frac{1}{2}\left[\left|\hat{D}(e^{j\Omega_0},n)\right|^2 + \left|\hat{D}(e^{j\Omega_1},n)\right|^2\right]$$

and

$$\widetilde{S}_{\hat{d}\hat{d},smooth}(\Omega_\mu,n) = \lambda_{Fre}\widetilde{S}_{\hat{d}\hat{d},smooth}(\Omega_{\mu-1},n) + (1 - \lambda_{Fre})\left|\hat{D}(e^{j\Omega_\mu},n)\right|^2, \text{ for } 0 < \mu < M.$$

in the positive direction and

$$S_{\hat{d}\hat{d},smooth}(\Omega_{M-1},n) = \frac{1}{2}\left[\tilde{S}_{\hat{d}\hat{d},smooth}(\Omega_{M-2},n) + \tilde{S}_{\hat{d}\hat{d},smooth}(\Omega_{M-1},n)\right]$$

$$S_{\hat{d}\hat{d},smooth}(\Omega_{\mu},n) = \lambda_{Fre}S_{\hat{d}\hat{d},smooth}(\Omega_{\mu+1},n) + (1-\lambda_{Fre})\tilde{S}_{\hat{d}\hat{d},smooth}(\Omega_{\mu},n), \text{ for } 0 \le \mu < M-1$$

in the negative direction. Experiments have shown that for a typical sampling rate of 11025 Hz and M = 256 sub-bands the smoothing parameter is advantageously chosen as $0.2 \le \lambda_{Fre} \le 0.8$. Smoothing of the sub-band microphone signals $Y(e^{j\Omega_{\mu}},n)$ is performed accordingly in order to obtain the smoothed microphone spectrum $S_{yy,mod}(\Omega_{\mu},n)$.

The processing means 8 and 9 are also configured to receive the output of the noise estimating means 7 and to determine the maximum of the smoothed estimated echo spectrum given above and the corresponding microphone spectrum and the estimate for the power density spectrum $\hat{S}_{bb}(\Omega_{\mu},n)$ of the background noise, respectively

$$S_{\hat{d}\hat{d},mod}(\Omega_{\mu},n) = \max\left\{S_{\hat{d}\hat{d},smooth}(\Omega_{\mu},n),K_{b}\hat{S}_{bb}(\Omega_{\mu},n)\right\}$$

and

$$S_{yy,mod}(\Omega_{\mu},n) = \max\left\{S_{yy,smooth}(\Omega_{\mu},n),K_{b}\hat{S}_{bb}(\Omega_{\mu},n)\right\}.$$

where the background noise is overestimated by $K_b$. Experiments have shown that $K_b$ may be chosen from $2 \le K_b \le 16$ for satisfying results for the echo suppression. Some distance (difference) $w_1 S_{\hat{d}\hat{d},mod}(\Omega_{\mu},n) - w_2 S_{yy,mod}(\Omega_{\mu},n)$, where $w_1$ and $w_2$ are properly chosen weight functions (e.g., depending on $\Omega_{\mu}$) or constants, can be used to determine a distance measure indicative for speech activity by which the filter characteristic for suppressing residual echoes can be controlled.

In the present example, however, it is determined whether a strong level increase or decrease of the microphone signal and/or the estimate echo signal is detected. Strong temporary level jumps would probably result in artifacts when the distance measure for determining the speech activity of a local speaker is calculated as follows. If no abrupt level changes are present, i.e. temporarily relatively homogeneous signals are present, the smoothed output signals of the processing means 8 and 9, i.e. $S_{yy,smooth}(\Omega_{\mu},n)$ and $S_{yy,smooth}(\Omega_{\mu},n)$, respectively, are used for signal flank detection 10

$$\Delta(\Omega_{\mu},n) = \begin{cases} 0, & \text{if} \quad (S_{\hat{d}\hat{d},smooth}(\Omega_{\mu},n) > K_{\Delta}S_{\hat{d}\hat{d},smooth}(\Omega_{\mu},n-1)) \\ & \vee (S_{\hat{d}\hat{d},smooth}(\Omega_{\mu},n) < \frac{1}{K_{\Delta}}S_{\hat{d}\hat{d},smooth}(\Omega_{\mu},n-1)) \\ & \vee (S_{yy,smooth}(\Omega_{\mu},n) > K_{\Delta}S_{yy,smooth}(\Omega_{\mu},n-1)) \\ & \vee (S_{yy,smooth}(\Omega_{\mu},n) < \frac{1}{K_{\Delta}}S_{yy,smooth}(\Omega_{\mu},n-1)) \\ 1, & \text{else} \end{cases}$$

with a detection threshold of typically $4 \le K_{\Delta} \le 100$.

By a distance detection means 11 a spectrum distance measure can be determined on the basis of $\Delta(\Omega_\mu, n)$ and the modified spectra $S_{\hat{d}\hat{d},\text{mod}}(\Omega_\mu, n)$ and $S_{yy,\text{mod}}(\Omega_\mu, n)$ calculated by the processing means 8 and 9:

$$C(\Omega_\mu, n) = \begin{cases} \Delta(\Omega_\mu, n)C_1, & \text{if } \left[S_{\hat{d}\hat{d},\text{mod}}(\Omega_\mu, n) > K_1 S_{yy,\text{mod}}(\Omega_\mu, n)\right], \\[2mm] \Delta(\Omega_\mu, n)C_2, & \text{if } \left[K_2 S_{yy,\text{mod}}(\Omega_\mu, n) \leq S_{\hat{d}\hat{d},\text{mod}}(\Omega_\mu, n) \leq K_1 S_{yy,\text{mod}}(\Omega_\mu, n)\right], \\[2mm] \Delta(\Omega_\mu, n)C_3, & \text{if } \left[K_3 S_{\hat{d}\hat{d},\text{mod}}(\Omega_\mu, n) \leq S_{yy,\text{mod}}(\Omega_\mu, n) \leq K_4 S_{\hat{d}\hat{d},\text{mod}}(\Omega_\mu, n)\right], \\[2mm] \Delta(\Omega_\mu, n)C_4, & \text{if } \left[S_{yy,\text{mod}}(\Omega_\mu, n) > K_4 S_{\hat{d}\hat{d},\text{mod}}(\Omega_\mu, n)\right], \\[2mm] 0, & \text{else}. \end{cases}$$

Suitable choices for the detection thresholds are, e.g., $K_1 = 16$, $K_2 = 4$, $K_3 = 4$, and $K_4 = 16$. Distances $C(\Omega_\mu, n)$ are specified, e.g., by detection parameters $C_1 = -0.4$, $C_2 = 0.1$, $C_3 = 0.1$, and $C_4 = 0.6$. Large positive values of the spectrum distance measure $C(\Omega_\mu, n)$ indicate that the power density of the microphone spectrum dominates the power density of the estimated echo. If the power density of the estimated echo significantly exceeds the power density of the microphone spectrum, strong changes in the LRM system are detected, characterized by a high negative cost parameter $C_1$.

The determination of both $\Delta(\Omega_\mu, n)$ and $C(\Omega_\mu, n)$ are restricted to those sub-bands that show a significant power of speech signals. This implies that the sub-bands are restricted to $\mu \in [\mu_{\text{start}}, \mu_{\text{end}}]$ where $\mu_{\text{start}}$ and $\mu_{\text{end}}$ are chosen corresponding to a frequency range coverage of about 200 Hz to about 3500 Hz.

An adding means 12 sums up the results $C(\Omega_\mu, n)$ for the individual sub-bands

$$C(n) = \sum_{\mu = \mu_{\text{start}}}^{\mu_{\text{end}}} C(\Omega_\mu, n) \ .$$

Subsequently, smoothing over a pre-determined time interval is preferably performed to obtain a smoothed distance measure $\overline{C}(n)$.

The detection result obtained by the distance detection means 12 can now be used for an efficient adaptation of the filter characteristic of a residual echo suppressing means 6 (see Fig. 1) in dependence of the detected speech activity as measured by $\overline{C}(n)$. If no speech activity is detected on the basis of the smoothed distance measure $\overline{C}(n)$, the residual echo filtering can be performed by means of the square of the magnitude of the estimated echo $\hat{D}(e^{j\Omega_\mu}, n)$ or the maximum of $|\hat{D}(e^{j\Omega_\mu}, n)|^2$ and the power density of the residual echo $\hat{S}_{\varepsilon\varepsilon}(\Omega_\mu, n)$. If, however, a double talk situation is present, i.e. both the local and the remote speaker are speaking, i.e. significant speech activity is detected, it is preferred that a Wiener filter characteristic but with a time-dependent filter parameter $\beta(n)$ is used. In conclusion, residual echo filtering according to the present example is carried out by means of the filter characteristic

$$G_{\text{mod}}(e^{j\Omega_\mu}, n) = \max\left\{G_{\text{min}}, \tilde{G}_{\text{mod}}(e^{j\Omega_\mu}, n)\right\}$$

with

$$\widetilde{G}(e^{j\Omega_\mu},n) = \begin{cases} 1 - \beta(n)\dfrac{\hat{S}_{\varepsilon\varepsilon}(\Omega_\mu,n)}{\hat{S}_{ee}(\Omega_\mu,n)}, & \text{if } \overline{C}(n) > C_{\text{thres}} \\[4mm] 1 - \beta(n)\dfrac{\max\left\{\hat{S}_{\varepsilon\varepsilon}(\Omega_\mu,n), \left|\hat{D}(e^{j\Omega_\mu},n)\right|^2\right\}}{\hat{S}_{ee}(\Omega_\mu,n)}, & \text{else.} \end{cases}$$

The parameter $\beta(n)$ controlling the sensibility of the filter depends on the smoothed distance measure

$$\beta(n) = \begin{cases} \beta_1, & \text{if } \overline{C}(n) > C_{\text{thres}} \\ \beta_2 > \beta_1, & \text{else.} \end{cases}$$

Experiments have shown that suitable values for the $\beta$ - parameters are, e.g., $\beta_1 = 1$ and $\beta_2 = 1000$. By $C_{\text{thres}}$ a predetermined threshold is given above which significant speech activity of the local speaker is considered to be present. Suppression is limited by $G_{\min}$, e.g., $G_{\min} = 0.1$.

The power density spectrum $\hat{S}_{ee}(\Omega_\mu,n)$ of the echo compensated sub-band microphone signals $E(e^{j\Omega_\mu},n)$ can be recursively determined by

$$\hat{S}_{ee}(\Omega_\mu,n) = \lambda_e\,\hat{S}_{ee}(\Omega_\mu,n-1) + (1-\lambda_e)\left|E(e^{j\Omega_\mu},n)\right|^2$$

with a smoothing parameter chosen as $0 \le \lambda_e \le 1$.

In the present example the power density spectrum of the residual echo $\hat{S}_{\varepsilon\varepsilon}(\Omega_\mu,n)$ is determined by

$$\hat{S}_{\varepsilon\varepsilon}(\Omega_\mu,n) = \hat{S}_{xx}(\Omega_\mu,n)\left|\hat{H}_\Delta(e^{j\Omega_\mu},n)\right|^2$$

wherein the estimated echo compensation obtained by the echo compensation filtering means 5 $\hat{H}_\Delta(e^{j\Omega_\mu},n)$ can be calculated by methods known in the art (see, e.g., Step-Size Control in Subband Echo Cancellation Systems, G. Schmidt, IWANEC 1999, Pocona Manor, Pennsylvania, USA, Conf. Proceed., p. 116 - 119, 1999). The estimated power density spectrum of the audio signal output by the loudspeaker $\hat{S}_{xx}(\Omega_\mu,n)$ is calculated similar to the power density spectrum $\hat{S}_{ee}(\Omega_\mu,n)$ of the echo compensated sub-band microphone signals:

$$\hat{S}_{xx}(\Omega_\mu,n) = \lambda_x\,\hat{S}_{xx}(\Omega_\mu,n-1) + (1-\lambda_x)\left|X(e^{j\Omega_\mu},n)\right|^2$$

with the smoothing parameter chosen as $0 \le \lambda_x \le 1$.

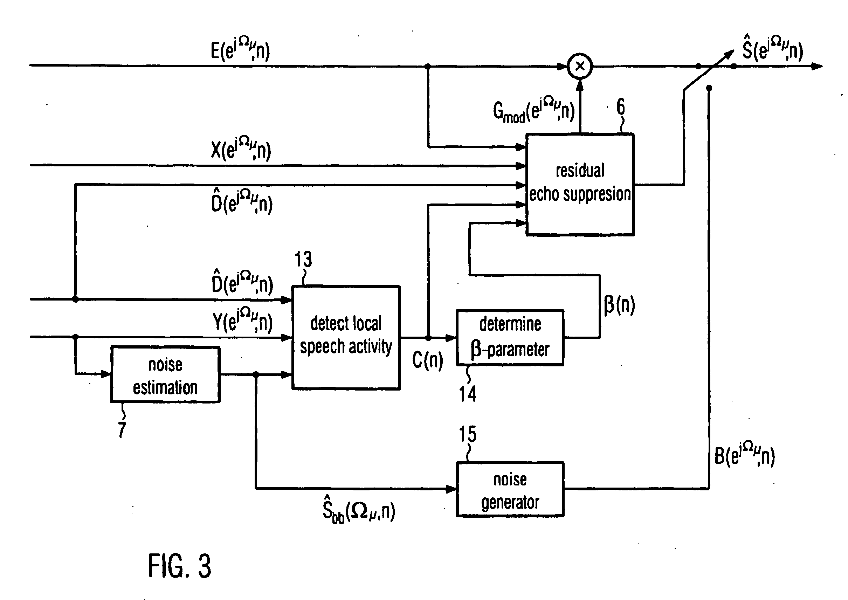

Fig. 3 shows an overview of the residual echo suppression according to an example of the present invention. The echo compensated sub-band microphone signals $E(e^{j\Omega_\mu},n)$ are filtered by a residual echo suppression means 6. For this filtering a filter characteristic $G_{\text{mod}}(e^{j\Omega_\mu},n)$ has to be adapted. Adaptation of the filter characteristic $G_{mod}(e^{j\Omega_\mu},n)$ is carried out on the basis of the result of the speech activity detection 13 (relating to the speech activity of a local speaker) $C(n)$ or the smoothed distance measure $\overline{C}(n)$, to be more specific. In particular, the above mentioned $\beta$ - parameter is controlled 14 by the detected speech activity.

As explained above a means for the detection of speech activity of the local speaker 13 receives the estimate for the echo sub-band signals $\hat{D}(e^{j\Omega_\mu},n)$ as well as the microphone sub-band signals $Y(e^{j\Omega_\mu},n)$ and, in addition, the output of a noise estimation means 7. The power density spectrum of the background noise $\hat{S}_{bb}(\Omega_\mu,n)$ obtained by the noise estimation means 7 is input in an artificial noise generator 15.

The noise generator is configured to generate artificial noise with substantially the same statistical power distribution as determined for the background noise by the noise estimation means 7. The artificially generated background noise sub-band signals $B(e^{j\Omega_\mu}, n)$ are output, if the output signal output by the residual echo suppressing means 6 would have a power density below the remaining background noise in order to avoid annoying abrupt changes of the background noise transmitted to the remote communication party. In the present example the residual echo suppressing means 6 also controls whether this so-called comfort noise shall be output. Thus, the desired signal to be transmitted to the remote communication party is eventually achieved by synthesizing the sub-band signals

$$\hat{S}(e^{j\Omega_\mu}, n) = \begin{cases} E(e^{j\Omega_\mu}, n) G_{\text{mod}}(e^{j\Omega_\mu}, n), & \text{if no comfort noise is to be output} \\ B(e^{j\Omega_\mu}, n), & \text{if comfort noise only is to be output.} \end{cases}$$

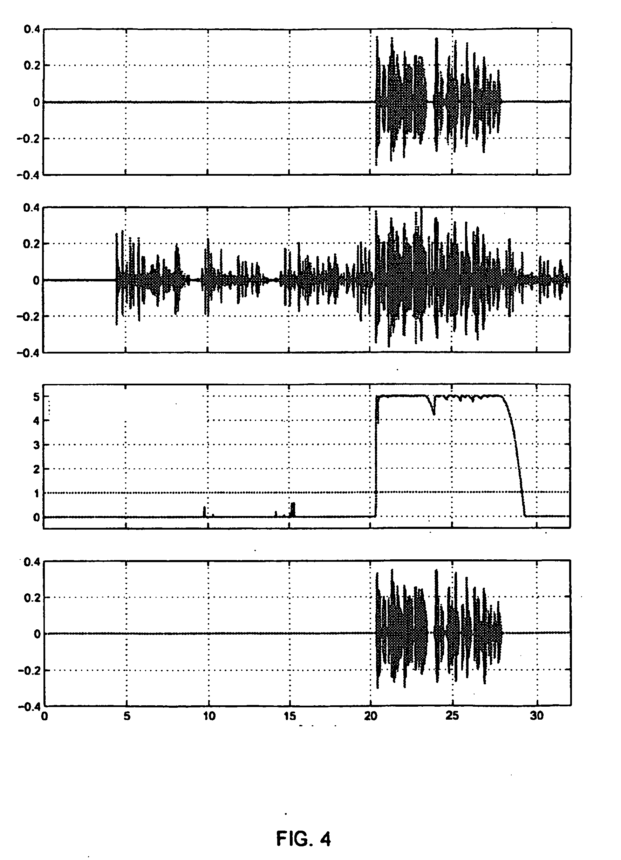

Fig. 4 illustrates the efficiency of the herein disclosed signal processing for echo reduction of a microphone signal by means of a computer simulation study. In all panels the abscissa show the amplitude of a signal in arbitrary units and the ordinate shows the time in seconds.

The upper panel shows a simulated speech signal of a local speaker and the second panel a corresponding microphone signal. The microphone signal comprises the speech signal as well as an echo contribution. During the simulation run the LRM system was changed by simulating speaker's movements after about 5 second and about 15 seconds. After about 20.5 seconds a double talk situation was simulated for a period of about 7 seconds, i.e. the simulated speech signal and echo contributions are detected by the microphone.

The smoothed distance measure $\overline{C}(n)$ as a result of the speech activity detection is displayed in the third panel. As can be clearly seen from Fig. 4, the smoothed distance measure $\overline{C}(n)$ does not or only very slightly respond to the speaker's movements. In particular, $\overline{C}(n)$ lies below the threshold $C_{\text{thres}} = 1$ and, thus, significant suppressing of residual echoes is carried out when the speaker moves. Contrary, during the period characterized by double-talk the smoothed distance measure $\overline{C}(n)$ indicates speech activity of the local speaker. As a result, the eventually obtained desired output signal $\hat{S}(e^{j\Omega_\mu}, n)$ shows a satisfying concordance with the simulated speech signal of the local speaker.

It is to be understood that some or all of the above described features can also be combined in different ways. Whereas in the discussed example hands-free telephony is considered, the disclosed algorithms can be applied for reducing the echoes in microphone signals, in general.

**Claims**

1. Method of reducing an echo for a microphone signal generated by a microphone (1), comprising
   echo compensating the microphone signal by subtracting an estimated echo signal from the microphone signal to generate an echo compensated signal;
   detecting a speech activity of a local speaker on the basis of the microphone signal and the estimated echo signal; and
   suppressing a residual echo in the echo compensated signal on the basis of the detected speech activity to obtain an output signal,
   wherein the microphone signal is converted to sub-band microphone signals and the estimated echo signal comprises estimated sub-band echo signals and wherein the echo compensating, detecting of the speech activity and suppressing of the residual echo is carried out in the sub-band regime and wherein the detecting of the speech activity of the local speaker comprises the steps of:

   smoothing in frequency the microphone sub-band signals, in particular, by first order recursive filtering;
   smoothing in frequency the estimated sub-band echo signals, in particular, by first order recursive filtering;
   determining for each sub-band of a predetermined range of sub-bands a distance between the smoothed microphone sub-band signals and the smoothed estimated sub-band echo signals;
   and wherein
   the suppressing of the residual echo in the echo compensated signal is based on the determined distances in each sub-band of the predetermined range of sub-bands.

2. The method according to claim 1, further comprising
   estimating the power density spectrum of background noise present in the microphone signal;
   and wherein

smoothing in frequency of the microphone sub-band signals comprises recursive filtering the power density spectrum of the sub-band microphone signals to obtain a smoothed power density spectrum of the microphone sub-band signals;

smoothing in frequency the estimated sub-band echo signals comprises recursive filtering the power density spectrum of the estimated sub-band echo signals to obtain a smoothed power density spectrum of the estimated sub-band echo signals;

and wherein

determining in each sub-band a distance between the smoothed microphone sub-band signals and the smoothed sub-band echo signals comprises determining in each sub-band the maximum of the smoothed power density spectrum of the microphone sub-band signals and the estimated background noise power spectrum enhanced by a first predetermined noise overestimate factor to obtain a modified microphone power density spectrum;

determining in each sub-band the maximum of the smoothed power density spectrum of the estimated sub-band echo signals and the estimated background noise power spectrum enhanced by a second predetermined noise overestimate factor to obtain a modified echo power density spectrum;

comparing the modified microphone power density spectrum and the modified echo power density spectrum to obtain a spectrum distance measure:

and wherein

the suppressing of the residual echo in the echo compensated sub-band signals is based on the spectrum distance measure.

3. Method according to one of the above claims, further comprising
estimating the power density of the echo compensated signal;
estimating the power density of the residual echo;
and wherein the suppressing of the residual echo in the echo compensated signal is based on the estimated power density of the echo compensated signal and the estimated power density of the residual echo.

4. The method according to claim 3, wherein the suppressing of the residual echo in the echo compensated signal comprises filtering the echo compensated signal by a filter with the filter characteristic

$$G(e^{j\Omega_\mu}, n) = 1 - \beta(n)\frac{\hat{S}_{\varepsilon\varepsilon}(\Omega_\mu, n)}{\hat{S}_{ee}(\Omega_\mu, n)}$$

where the mid-frequency of the sub-band $\mu$ is denoted by $\Omega_\mu$, $\hat{S}_{ee}"(\Omega_\mu, n)$ and $\hat{S}_{\varepsilon\varepsilon}(\Omega_\mu, n)$ are the estimated power density of the echo compensated signal and the estimated power density of the residual echo, respectively, n is the discrete time index and $\beta(n)$ is a filter parameter depending on the detected speech activity.

5. The method according to claim 3, wherein the suppressing of the residual echo in the echo compensated signal comprises filtering the echo compensated signal by a filter with the filter characteristic

$$G(e^{j\Omega_\mu}, n) = \begin{cases} 1 - \beta(n)\dfrac{\hat{S}_{\varepsilon\varepsilon}(\Omega_\mu, n)}{\hat{S}_{ee}(\Omega_\mu, n)}, & \text{if } \overline{C}(n) > C_{\text{thres}} \\[4em] 1 - \beta(n)\dfrac{\max\left\{\hat{S}_{\varepsilon\varepsilon}(\Omega_\mu, n), \left|\hat{D}(e^{j\Omega_\mu}, n)\right|^2\right\}}{\hat{S}_{ee}(\Omega_\mu, n)}, \end{cases}$$

else

or

$$G(e^{j\Omega_\mu},n) = \begin{cases} 1 - \beta(n)\dfrac{\hat{S}_{es}(\Omega_\mu,n)}{\hat{S}_{ee}(\Omega_\mu,n)}, & \text{if } \overline{C}(n) > C_{\text{thres}} \\[4ex] 1 - \beta(n)\dfrac{\left|\hat{D}(e^{j\Omega_\mu},n)\right|^2}{\hat{S}_{es}(\Omega_\mu,n)}, & \textbf{else} \end{cases}$$

where $\overline{C}(n)$ is a measure for the detected speech activity and $C_{\text{thres}}$ is a predetermined threshold.

6. The method according to claim 4 or 5, wherein the filter characteristic is limited by max[$G_{min}$, $G(e^{j\Omega_\mu},n)$] where $G_{min}$ correspond to a pre-determined degree of suppression.

7. The method according to one of the preceding claims, further comprising
determining the power density of the output signal and of background noise present in the microphone signal;
comparing the power density of the output signal with the power density of the background noise; and
transmitting the output signal to a remote party, if the power density of the output signal exceeds the power density of the background noise, or
transmitting artificial noise to the remote party, if the power density of the background noise exceeds the power density of the output signal.

8. Method of reducing an echo for a microphone signal generated by a microphone (1), comprising
echo compensating the microphone signal by subtracting an estimated echo signal from the microphone signal to generate an echo compensated signal;
detecting a speech activity of a local speaker on the basis of the microphone signal and the estimated echo signal; and
suppressing a residual echo in the echo compensated signal on the basis of the detected speech activity to obtain an output signal,
wherein the microphone signal is converted to Fourier transformed microphone signals and the estimated echo signal comprises estimated Fourier transformed echo signals and wherein the echo compensating, detecting of the speech activity and suppressing of the residual echo is carried out in the Fourier regime and wherein the detecting of the speech activity of the local speaker comprises the steps of:

smoothing in frequency the Fourier transformed microphone signals, in particular, by first order recursive filtering;
smoothing in frequency the estimated Fourier transformed echo signals, in particular, by first order recursive filtering;
determining for each Fourier component of a predetermined range of Fourier components a distance between the smoothed Fourier transformed microphone signals and the smoothed estimated Fourier transformed echo signals;
and wherein
the suppressing of the residual echo in the echo compensated signal is based on the determined distances in each Fourier component of the predetermined range of Fourier components.

9. Computer program product, comprising one or more computer readable media having computer-executable instructions for performing the steps of the method according to one of the claims 1-8.

10. System for processing a microphone signal generated by a microphone (1), comprising
an echo compensation filtering means (5) configured to receive and echo compensate the microphone signal to output an echo compensated signal based on the received microphone signal;
a speech activity detection means configured to detect speech activity of a local speaker by receiving and analyzing the echo compensated signal and to output a detection signal;
a residual echo suppressing means (6) configured to receive the detection signal and to receive and filter the echo compensated signal on the basis of the detection signal to output an output signal;
filter banks (3, 4) configured to convert the microphone signal and another audio signal to be output by at least one loudspeaker (2) installed in the same room as the microphone (1);

a background noise estimation means (7) configured to estimate the background noise power spectrum of background noise present in the microphone signal, and wherein the speech activity detection means comprises

a recursive filtering means configured to smooth the power density spectrum of sub-band microphone signals to obtain a smoothed power density spectrum of the microphone sub-band signals;

a recursive filtering means configured to smooth the power density spectrum of estimated sub-band echo signals to obtain a smoothed power density spectrum of the estimated sub-band echo signals;

a determining means configured to determine in each sub-band the maximum of the smoothed power density spectrum of the microphone sub-band signals and the estimated background noise power spectrum enhanced by a predetermined noise overestimate factor and to generate a modified microphone power density spectrum of the determined maximum values;

a determining means configured to determine in each sub-band the maximum of the smoothed power density spectrum of the estimated sub-band echo signals and the estimated background noise power spectrum enhanced by the predetermined noise overestimate factor and to generate a modified echo power density spectrum of the determined maximum values; and

a comparing means configured to compare the modified microphone power density spectrum and the modified echo power density spectrum and to generate a spectrum distance signal;

and wherein

the residual echo suppressing means (6) is configured to receive the spectrum distance signal and to receive and filter the echo compensated signal on the basis of the spectrum distance signal.

11. The system of claim 10, wherein the speech activity detection means is configured to estimate the power density of the echo compensated signal and the power density of a residual echo present in the echo compensated signal; and wherein the residual echo suppressing means (6) is configured to suppress the residual echo in the echo compensated signal based on the estimated power density of the echo compensated signal and the estimated power density of the residual echo.

12. The system of claim 10 or 11, wherein the residual echo suppressing means (6) comprises a filtering means with the filter characteristic

$$G(e^{j\Omega_\mu}, n) = 1 - \beta(n) \frac{\hat{S}_{\varepsilon\varepsilon}(\Omega_\mu, n)}{\hat{S}_{ee}(\Omega_\mu, n)}$$

where the mid-frequency of the sub-band $\mu$ is denoted by $\Omega_\mu$, , $\hat{S}_{ee}(\Omega_\mu, n)$, $\hat{S}_{\varepsilon\varepsilon}(\Omega_\mu, n)$ are the estimated power density of the echo compensated signal and the estimated power density of the residual echo, n is the discrete time index and $\beta(n)$ is a filter parameter depending on the detected speech activity.

13. The system of one of the claims 10 - 12, wherein the residual echo suppressing means (6) comprises a filtering means with the filter characteristic

$$G(e^{j\Omega_\mu}, n) = \begin{cases} 1 - \beta(n) \dfrac{\hat{S}_{\varepsilon\varepsilon}(\Omega_\mu, n)}{\hat{S}_{ee}(\Omega_\mu, n)}, & \text{if } \overline{C}(n) > C_{\text{thres}} \\ \\ 1 - \beta(n) \dfrac{\max\left\{\hat{S}_{\varepsilon\varepsilon}(\Omega_\mu, n), \left|\hat{D}(e^{j\Omega_\mu}, n)\right|^2\right\}}{\hat{S}_{ee}(\Omega_\mu, n)}, \end{cases}$$

else

or

$$G(e^{j\Omega_\mu},n) = \begin{cases} 1 - \beta(n)\dfrac{\hat{S}_{es}(\Omega_\mu,n)}{\hat{S}_{ee}(\Omega_\mu,n)}, & \text{if } \overline{C}(n) > C_{\text{thres}} \\[2em] 1 - \beta(n)\dfrac{\left|\hat{D}(e^{j\Omega_\mu},n)\right|^2}{\hat{S}_{es}(\Omega_\mu,n)}, & \text{else} \end{cases}$$

where $\overline{C}(n)$ is a measure for the detected speech activity and $C_{\text{thres}}$ is a predetermined threshold.

**14.** The system according to one of the claims 10 - 13, further comprising

a noise generator (15) configured to generate artificial noise;

a means configured to determine the power density of the output signal and of background noise present in the microphone signal;

a means configured to compare the power density of the output signal with the power density of the background noise; and

a control means configured to cause transmission of the output signal to a remote party, if the power density of the output signal exceeds the power density of the background noise; and to cause transmission of the generated artificial noise, if the power density of the background noise exceeds the power density of the output signal.

**15.** System for processing a microphone signal generated by a microphone (1), comprising

an echo compensation filtering means (5) configured to receive and echo compensate the microphone signal to output an echo compensated signal based on the received microphone signal;

a speech activity detection means configured to detect speech activity of a local speaker by receiving and analyzing the echo compensated signal and to output a detection signal;

a residual echo suppressing means (6) configured to receive the detection signal and to receive and filter the echo compensated signal on the basis of the detection signal to output an output signal;

Fourier transform means configured to Fourier transform the microphone signal and another audio signal to be output by at least one loudspeaker (2) installed in the same room as the microphone (1);

a background noise estimation means (7) configured to estimate the background noise power spectrum of background noise present in the microphone signal, and wherein the speech activity detection means comprises

a recursive filtering means configured to smooth the power density spectrum of Fourier transformed microphone signals to obtain a smoothed power density spectrum of the Fourier transformed microphone signals;

a recursive filtering means configured to smooth the power density spectrum of estimated Fourier transformed echo signals to obtain a smoothed power density spectrum of the estimated Fourier transformed echo signals;

a determining means configured to determine in each Fourier component the maximum of the smoothed power density spectrum of the Fourier transformed microphone signals and the estimated background noise power spectrum enhanced by a predetermined noise overestimate factor and to generate a modified microphone power density spectrum of the determined maximum values;

a determining means configured to determine in each Fourier component the maximum of the smoothed power density spectrum of the estimated Fourier transformed echo signals and the estimated background noise power spectrum enhanced by the predetermined noise overestimate favor and to generate a modified echo power density spectrum of the determined maximum values; and

a comparing means configured to compare the modified microphone power density spectrum and the modified echo power density spectrum and to generate a spectrum distance signal;

and wherein

the residual echo suppressing means (6) is configured to receive the spectrum distance signal and to receive and filter the echo compensated signal on the basis of the spectrum distance signal.

**16.** Hands-free telephone set comprising the system according to one of the claims 10-15.

**17.** Vehicle communication system, comprising at least one microphone (1), at least one loudspeaker (2) and the system according to one of the claims 10 -15 or the hands-free telephone set according to claim 16.

18. Speech recognition system or speech dialog system comprising the system according to one of the claims 10-15.


**Patentansprüche**

1. Verfahren zum Verringern eines Echos für ein Mikrofonsignal, das von einem Mikrofon (1) erzeugt wird, umfassend:

   Echokompensieren des Mikrofonsignals durch Subtrahieren eines geschätzten Echosignals von dem Mikrofonsignal, um ein echokompensiertes Signal zu erzeugen;
   Detektieren einer Sprachaktivität eines lokalen Sprechers auf der Grundlage des Mikrofonsignals and des geschätzten Echosignals; und
   Unterdrücken eines residualen Echos in dem echokompensierten Signal auf der Grundlage der detektierten Sprechaktivität, um ein Ausgangssignal zu erhalten,
   wobei das Mikrofonsignal in Mikrofon-Teilbandsignate umgewandelt wird und das geschätzte Echosignal geschätzte Teilband-Echosignale umfasst und wobei das Echokompensieren, Detektieren der Sprechaktivität und Unterdrücken des residualen Echos in dem Teilband-Bereich ausgeführt wird und wobei das Detektieren der Sprechaktivität des lokalen Sprechers die Schritte umfasst:
   Frequenzglätten der Mikrofon-Teilbandsignale, insbesondere durch rekursives Filtern erster Ordnung;
   Frequenzglätten der geschätzten Teilband-Echosignale, insbesondere durch rekursives Filtern erster Ordnung;
   Bestimmen eines Abstands zwischen den geglätteten Mikrofon-Teilbandsignalen und den geglätteten geschätzten Teilband-Echosignalen für jedes Teilband eines vorbestimmten Bereichs von Teilbändern;
   und wobei
   das Unterdrücken des residualen Echos in dem echokompensierten Signal auf den bestimmten Abständen in jedem Teilband des vorbestimmten Bereichs von Teilbändern basiert.

2. Das Verfahren gemäß Anspruch 1, weiterhin umfassend
   Schätzen des Leistungsdichtespektrums von Hintergrundgeräusch, das in dem Mikrofonsignal vorliegt;
   und wobei
   Frequenzglätten der Mikrofon-Teilbandsignale rekursives Filtern des Leistungsdichtespektrums der Teilband-Mikrofonsignale, um ein geglättetes Leistungsdichtespektrum der Mikrofon-Teilbandsignale zu erhalten, umfasst;
   Frequenzglätten der geschätzten Teilband-Echosignale rekursives Filtern des Leistungsdichtespektrums der geschätzten Teilband-Echosignale, um ein geglättetes Leistungsdichtespektrum der geschätzten Teilband-Echosignale zu erhalten, umfasst;
   und wobei
   Bestimmen eines Abstands zwischen den geglätteten Mikrofon-Teilbandsignalen und den geglätteten geschätzten Teilband-Echosignalen in jedem Teilband Bestimmen des Maximums des geglätteten Leistungsdichtespektrums der Mikrofon-Teilbandsignale und des geschätzten Hintergrundgeräuschleistungsdichtespektrums, erhöht um einen ersten vorbestimmten Geräusch-Überschätzfaktor, in jedem Teilband, um ein modifiziertes Mikrofonleistungsdichtespektrum zu erhalten, umfasst;
   Bestimmen des Maximums des geglätteten Leistungsdichtespektrums der geschätzten Teilband-Echosignale und des geschätzten Hintergrundgeräuschleistungsdichtespektrums, erhöht um einen zweiten vorbestimmten Geräusch-Überschätzfaktor, in jedem Teilband, um ein modifiziertes Echoleistungsdichtespektrum zu erhalten;
   Vergleichen des modifizierten Mikrofonleistungsdichtespektrums und des modifizierten Echoleistungsdichtespektrums, um ein Spektrumsabstandsmaß zu erhalten;
   und wobei
   das Unterdrücken des residualen Echos in den echokompensierten Teilbandsignalen auf dem Spektrumsabstandsmaß basiert.

3. Verfahren gemäß einem der vorhergehenden Ansprüche, weiterhin umfassend
   Schätzen der Leistungsdichte des echokompensierten Signals;
   Schätzen der Leistungsdichte des residualen Echos;
   und wobei das Unterdrücken des residualen Echos in dem echokompensierten Signal auf der geschätzten Leistungsdichte des echokompensierten Signals und der geschätzten Leistungsdichte des residualen Echos basiert.

4. Das Verfahren gemäß Anspruch 3, in dem das Unterdrücken des residualen Echos in dem echokompensierten Signal Filtern des echokompensierten Signals durch ein Filter mit der Filterkennlinie

$$G(e^{j\Omega_\mu}, n) = 1 - \beta(n)\frac{\hat{S}_{\varepsilon\varepsilon}(\Omega_\mu, n)}{\hat{S}_{ee}(\Omega_\mu, n)}$$

umfasst, wobei die Mittenfrequenz des Teilbands $\mu$ durch $\Omega_\mu$ bezeichnet ist, $\hat{S}_{ee}(\Omega_\mu, n)$ und $\hat{S}_{\varepsilon\varepsilon}(\Omega_\mu, n)$ die geschätzte Leistungsdichte des echokompensierten Signals und die geschätzte Leistungsdichte des residualen Echos ist, n der diskrete Zeitindex ist und $\beta(n)$ ein Filterparameter ist, der von der detektierten Sprechaktivität abhängt.

**5.** Das Verfahren gemäß Anspruch 3, in dem das Unterdrücken des residualen Echos in dem echokompensierten Signal Filtern des echokompensierten Signals durch ein Filter mit der Filterkennlinie

$$G(e^{j\Omega_\mu}, n) = \begin{cases} 1 - \beta(n)\dfrac{\hat{S}_{\varepsilon\varepsilon}(\Omega_\mu, n)}{\hat{S}_{ee}(\Omega_\mu, n)}, & \text{if } \overline{C}(n) > C_{\text{thres}} \\[4ex] 1 - \beta(n)\dfrac{\max\left\{\hat{S}_{\varepsilon\varepsilon}(\Omega_\mu, n), \left|\hat{D}(e^{j\Omega_\mu}, n)\right|^2\right\}}{\hat{S}_{\varepsilon\varepsilon}(\Omega_\mu, n)}, \end{cases}$$

sonst
oder

$$G(e^{j\Omega_\mu}, n) = \begin{cases} 1 - \beta(n)\dfrac{\hat{S}_{\varepsilon\varepsilon}(\Omega_\mu, n)}{\hat{S}_{ee}(\Omega_\mu, n)}, & \text{if } \overline{C}(n) > C_{\text{thres}} \\[4ex] 1 - \beta(n)\dfrac{\left|\hat{D}(e^{j\Omega_\mu}, n)\right|^2}{\hat{S}_{\varepsilon\varepsilon}(\Omega_\mu, n)}, & \text{sonst} \end{cases}$$

umfasst,
wobei $\overline{C}(n)$ ein Maß für die detektierte Sprechaktivität ist und $C_{thres}$ eine vorbestimmte Schwelle ist.

**6.** Das Verfahren gemäß Anspruch 4 oder 5, in dem die Filterkennlinie durch $\max[G_{\text{min}}, G(e^{j\Omega_\mu}, n)]$ begrenzt ist, wobei $G_{\text{min}}$ einem vorbestimmten Grad einer Unterdrückung entspricht.

**7.** Das Verfahren gemäß einem der vorhergehenden Ansprüche, das weiterhin umfasst
Bestimmen der Leistungsdichte des Ausgangssignals und von Hintergrundgeräusch, das in dem Mikrofonsignal vorliegt;
Vergleichen der Leistungsdichte des Ausgangssignals mit der Leistungsdichte des Hintergrundgeräuschs; und
Senden des Ausgangssignals an eine entfernte Partei, wenn die Leistungsdichte des Ausgangssignals die Leistungsdichte des Hintergrundgeräuschs übersteigt, oder
Senden künstlichen Geräuschs an die entfernte Partei, wenn die Leistungsdichte des Hintergrundgeräuschs die Leistungsdichte des Ausgangssignals übersteigt.

**8.** Verfahren zum Verringern eines Echos für ein Mikrofonsignal, das von einem Mikrofon (1) erzeugt wird, umfassend:

Echokompensieren des Mikrofonsignals durch Subtrahieren eines geschätzten Echosignals von dem Mikrofonsignal, um ein echokompensiertes Signal zu erzeugen;

Detektieren einer Sprachaktivität eines lokalen Sprechers auf der Grundlage des Mikrofonsignals and des geschätzten Echosignals; und

Unterdrücken eines residualen Echos in dem echokompensierten Signal auf der Grundlage der detektierten Sprechaktivität, um ein Ausgangssignal zu erhalten,

wobei das Mikrofonsignal in Fourier-transformierte Mikrofonsignale umgewandelt wird und das geschätzte Echosignal geschätzte Fourier-transformierte Echosignale umfasst und wobei das Echokompensieren, Detektieren der Sprechaktivität und Unterdrücken des residualen Echos im Fourier-Bereich ausgeführt wird und wobei das Detektieren der Sprechaktivität des lokalen Sprechers die Schritte umfasst:

Frequenzglätten der Fourier-transformierten Mikrofonsignale, insbesondere durch rekursives Filtern erster Ordnung;

Frequenzglätten der geschätzten Fourier-transformierten Echosignale, insbesondere durch rekursives Filtern erster Ordnung;

Bestimmen eines Abstands zwischen den geglätteten Fourier-transformierten Mikrofonsignalen und den geglätteten geschätzten Fourier-transformierten Echosignalen für jede Fourier-Komponente eines vorbestimmten Bereichs von Fourier-Komponenten;

und wobei

das Unterdrücken des residualen Echos in dem echokompensierten Signal auf den bestimmten Abständen in jeder Fourier-Komponente des vorbestimmten Bereichs von Fourier-Komponenten basiert.

9. Computerprogrammprodukt, das ein oder mehrere computerlesbare Medien umfasst, die computerausführbare Anweisungen zum Ausführen der Schritte des Verfahrens gemäß einem der Ansprüche 1-8 aufweisen.

10. System zum Verarbeiten eines Mikrofonsignals, das von einem Mikrofon (1) erzeugt wird, umfassend:

eine Echokompensationsfiltereinrichtung (5), die dazu ausgebildet ist, das Mikrofonsignal zu empfangen und ein Echo zu kompensieren, um ein echokompensiertes Signal auf der Grundlage des empfangenen Mikrofonsignals auszugeben;

eine Sprechaktivitätsdetektionseinrichtung, die dazu ausgebildet ist, eine Sprechaktivität eines lokalen Sprechers durch Empfangen und Analysieren des echokompensierten Signals zu detektieren und ein Detektionssignal auszugeben;

eine Einrichtung (6) zur Unterdrückung eines residualen Echos, die dazu ausgebildet ist, das Detektionssignal zu empfangen und das echokompensierte Signal zu empfangen und auf der Grundlage des Detektionssignals zu filtern, um ein Ausgangssignal auszugeben;

Filterbänke (3, 4), die dazu ausgebildet sind, das Mikrofonsignal und ein weiteres Audiosignal, das von zumindest einem Lautsprecher (2) auszugeben ist, der in dem selben Raum wie das Mikrofon (1) installiert ist, umzuwandeln;

eine Hintergrundgeräuschschätzeinrichtung (7), die dazu ausgebildet ist, das Hintergrundgeräuschleistungsspektrum von Hintergrundgeräusch, das in dem Mikrofonsignal vorliegt, zu schätzen, und wobei die Sprechaktivitätsdetektionseinrichtung umfasst

eine Einrichtung zum rekursiven Filtern, die dazu ausgebildet ist, das Leistungsdichtespektrum von Teilband-Mikrofonsignalen zu glätten, um ein geglättetes Leistungsdichtespektrum der Mikrofon-Teilbandsignale zu erhalten;

eine Einrichtung zum rekursiven Filtern, die dazu ausgebildet ist, das Leistungsdichtespektrum von geschätzten Teilband-Echosignalen zu glätten, um ein geglättetes Leistungsdichtespektrum der geschätzten Teilband-Echosignale zu erhalten;

eine Bestimmungseinrichtung, die dazu ausgebildet ist, das Maximum des geglätteten Leistungsdichtespektrums der Mikrofon-Teilbandsignale und des geschätzten Hintergrundgeräuschleistungsdichtespektrums, erhöht um einen vorbestimmten Geräusch-Überschätzfaktor, in jedem Teilband zu bestimmen und ein modifiziertes Mikrofonleistungsdichtespektrum der bestimmten Maximalwerte zu erzeugen;

eine Bestimmungseinrichtung, die dazu ausgebildet ist, das Maximum des geglätteten Leistungsdichtespektrums der geschätzten Teilband-Echosignale und des geschätzten Hintergrundgeräuschleistungsdichtespektrums, erhöht um den vorbestimmten Geräusch-Überschätzfaktor, in jedem Teilband zu bestimmen und ein modifiziertes Echoleistungsdichtespektrum der bestimmten Maximalwerte zu erzeugen; und

eine Vergleichseinrichtung, die dazu ausgebildet ist, das modifizierte Mikrofonleistungsdichtespektrum mit dem modifizierten Echoleistungsdichtespektrum zu vergleichen und ein Spektrumabstandssignal zu erzeugen; und in dem

die Einrichtung (6) zur Unterdrückung eines residualen Echos dazu ausgebildet ist, das Spektrumabstandssignal zu empfangen und das echokompensierte Signal zu empfangen und auf der Grundlage des Spektrumabstandssignals zu filtern.

11. Das System von Anspruch 10, in dem die Sprechaktivitätsdetektionseinrichtung dazu ausgebildet ist, die Leistungsdichte des echokompensierten Signals und die Leistungsdichte eines residualen Echos, das in dem echokompensierten Signal vorliegt, zu schätzen;
und in dem die Einrichtung (6) zur Unterdrückung eines residualen Echos dazu ausgebildet ist, das residuale Echo in dem echokompensierten Signal auf der Grundlage der geschätzten Leistungsdichte des echokompensierten Signals und der geschätzten Leistungsdichte des residualen Echos zu unterdrücken.

12. Das System von Anspruch 10 oder 11, in dem die Einrichtung (6) zur Unterdrückung eines residualen Echos eine Filtereinrichtung mit der Filterkennlinie

$$G(e^{j\Omega_\mu},n) = 1 - \beta(n)\frac{\hat{S}_{\varepsilon\varepsilon}(\Omega_\mu,n)}{\hat{S}_{ee}(\Omega_\mu,n)}$$

umfasst, wobei die Mittenfrequenz des Teilbands $\mu$ durch $\Omega_\mu$ bezeichnet ist, $\hat{S}_{ee}(\Omega_\mu,n)$ und $\hat{S}_{\varepsilon\varepsilon}(\Omega_\mu,n)$ die geschätzte Leistungsdichte des echokompensierten Signals und die geschätzte Leistungsdichte des residualen Echos ist, n der diskrete Zeitindex ist und $\beta(n)$ ein Filterparameter ist, der von der detektierten Sprechaktivität abhängt.

13. Das System von einem der Ansprüche 10 - 12, in dem die Einrichtung (6) zur Unterdrückung eines residualen Echos eine Filtereinrichtung mit der Filterkennlinie

$$G(e^{j\Omega_\mu},n) = \begin{cases} 1 - \beta(n)\dfrac{\hat{S}_{\varepsilon\varepsilon}(\Omega_\mu,n)}{\hat{S}_{ee}(\Omega_\mu,n)}, & \text{if } \overline{C}(n) > C_{\text{thres}} \\[4ex] 1 - \beta(n)\dfrac{\max\left\{\hat{S}_{\varepsilon\varepsilon}(\Omega_\mu,n),\left|\hat{D}(e^{j\Omega_\mu},n)\right|^2\right\}}{\hat{S}_{\varepsilon\varepsilon}(\Omega_\mu,n)}, \end{cases}$$

sonst
oder

$$G(e^{j\Omega_\mu},n) = \begin{cases} 1 - \beta(n)\dfrac{\hat{S}_{\varepsilon\varepsilon}(\Omega_\mu,n)}{\hat{S}_{ee}(\Omega_\mu,n)}, & \text{if } \overline{C}(n) > C_{\text{thres}} \\[4ex] 1 - \beta(n)\dfrac{\left|\hat{D}(e^{j\Omega_\mu},n)\right|^2}{\hat{S}_{\varepsilon\varepsilon}(\Omega_\mu,n)}, & \text{sonst} \end{cases}$$

umfasst, wobei $\overline{C}(n)$ ein Maß für die detektierte Sprechaktivität ist und $C_{\text{thres}}$ eine vorbestimmte Schwelle ist.

**14.** Das System von einem der Ansprüche 10-13, das weiterhin umfasst

einen Geräuschgenerator (15), der dazu ausgebildet ist, künstliches Geräusch zu erzeugen;

eine Einrichtung, die dazu ausgebildet ist, die Leistungsdichte des Ausgangssignals und von Hintergrundgeräusch, das in dem Mikrofonsignal vorliegt, zu bestimmen;

eine Einrichtung, die dazu ausgebildet ist, die Leistungsdichte des Ausgangssignals mit der Leistungsdichte des Hintergrundgeräuschs zu vergleichen; und

eine Steuereinrichtung, die dazu ausgebildet ist, eine Übertragung des Ausgangssignal an eine entfernte Partei zu veranlassen, wenn die Leistungsdichte des Ausgangssignals die Leistungsdichte des Hintergrundgeräuschs übersteigt, und eine Übertragung des erzeugten künstlichen Geräusches zu veranlassen, wenn die Leistungsdichte des Hintergrundgeräuschs die Leistungsdichte des Ausgangssignals übersteigt.

**15.** System zum Verarbeiten eines Mikrofonsignals, das von einem Mikrofon (1) erzeugt wird, umfassend:

eine Echokompensationsfiltereinrichtung (5), die dazu ausgebildet ist, das Mikrofonsignal zu empfangen und ein Echo zu kompensieren, um ein echokompensiertes Signal auf der Grundlage des empfangenen Mikrofonsignals auszugeben;

eine Sprechaktivitätsdetektionseinrichtung, die dazu ausgebildet ist, eine Sprechaktivität eines lokalen Sprechers durch Empfangen und Analysieren des echokompensierten Signals zu detektieren und ein Detektionssignal auszugeben;

eine Einrichtung (6) zur Unterdrückung eines residualen Echos, die dazu ausgebildet ist, das Detektionssignal zu empfangen und das echokompensierte Signal zu empfangen und auf der Grundlage des Detektionssignals zu filtern, um ein Ausgangssignal auszugeben;

eine Fourier-Transformations-Einrichtung, die dazu ausgebildet ist, das Mikrofonsignal und ein weiteres Audiosignal das von zumindest einem Lautsprecher (2) auszugeben ist, der in dem selben Raum wie das Mikrofon (1) installiert ist, einer Fourier-Transformation zu unterziehen;

eine Hintergrundgeräuschschätzeinrichtung (7), die dazu ausgebildet ist, das Hintergrundgeräuschleistungsspektrum von Hintergrundgeräusch, das in dem Mikrofonsignal vorliegt, zu schätzen, und wobei die Sprechaktivitätsdetektionseinrichtung umfasst

eine Einrichtung zum rekursiven Filtern, die dazu ausgebildet ist, das Leistungsdichtespektrum von Fourier-transformierten Mikrofonsignalen zu glätten, um ein geglättetes Leistungsdichtespektrum der Fourier-transformierten Mikrofonsignale zu erhalten;

eine Einrichtung zum rekursiven Filtern, die dazu ausgebildet ist, das Leistungsdichtespektrum von geschätzten Fourier-transformierten Echosignalen zu glätten, um ein geglättetes Leistungsdichtespektrum der geschätzten Fourier-transformierten Echosignale zu erhalten;

eine Bestimmungseinrichtung, die dazu ausgebildet ist, das Maximum des geglätteten Leistungsdichtespektrums der Fourier-transformierten Mikrofonsignale und des geschätzten Hintergrundgeräuschleistungsdichtespektrums, erhöht um einen vorbestimmten Geräusch-Überschätzfaktor, in jeder Fourierkomponente zu bestimmen und ein modifiziertes Mikrofonleistungsdichtespektrum der bestimmten Maximalwerte zu erzeugen;

eine Bestimmungseinrichtung, die dazu ausgebildet ist, das Maximum des geglätteten Leistungsdichtespektrums der geschätzten Fourier-transformierten Echosignale und des geschätzten Hintergrundgeräuschleistungsdichtespektrums, erhöht um den vorbestimmten Geräusch-Überschätzfaktor, in jeder Fourierkomponente zu bestimmen und ein modifiziertes Echoleistungsdichtespektrum der bestimmten Maximalwerte zu erzeugen; und

eine Vergleichseinrichtung, die dazu ausgebildet ist, das modifizierte Mikrofonleistungsdichtespektrum mit dem modifizierten Echoleistungsdichtespektrum zu vergleichen und ein Spektrumabstandssignal zu erzeugen; und in dem

die Einrichtung (6) zur Unterdrückung eines residualen Echos dazu ausgebildet ist, das Spektrumabstandssignal zu empfangen und das echokompensierte Signal zu empfangen und auf der Grundlage des Spektrumabstandssignals zu filtern.

**16.** Freisprechtelefonvorrichtung, die das System gemäß einem der Ansprüche 10 - 15 umfasst.

**17.** Fahrzeugkommunikationssystem, das zumindest ein Mikrofon (1), zumindest einen Lautsprecher (2) und das System gemäß einem der Ansprüche 10-15 oder die Freisprechtelefonvorrichtung gemäß Anspruch 16 umfasst.

**18.** Spracherkennungssystem oder Sprachdialogsystem, das das System gemäß einem der Ansprüche 10-15 umfasst.

**Revendications**

1. Procédé de réduction d'un écho pour un signal de microphone généré par un microphone (1), ledit procédé comprenant les étapes consistant à :

    compenser l'écho du signal de microphone en soustrayant un signal d'écho estimé du signal de microphone, afin de générer un signal à l'écho compensé ;
    détecter une activité vocale d'un locuteur local sur la base du signal de microphone et du signal d'écho estimé ; et
    supprimer un écho résiduel dans le signal à l'écho compensé sur la base de l'activité vocale détectée afin d'obtenir un signal de sortie,
    dans lequel le signal de microphone est converti en des signaux de microphone en sous-bandes et le signal d'écho estimé comprend des signaux d'écho de sous-bande estimés et dans lequel les étapes de compensation d'écho, de détection de l'activité vocale et de suppression de l'écho résiduel sont exécutées dans le régime de sous-bande et dans lequel l'étape de détection de l'activité vocale du locuteur local comprend les étapes consistant à :

        lisser en fréquence les signaux de microphone en sous-bandes, en particulier par filtrage récursif de premier ordre,
        lisser en fréquence les signaux d'écho en sous-bandes estimés, en particulier par filtrage récursif de premier ordre ;
        déterminer, pour chaque sous-bande d'une bande prédéterminée de sous-bandes, une distance entre les signaux de microphone en sous-bandes lissés et les signaux d'écho en sous-bandes estimés ;
        et dans lequel la suppression de l'écho résiduel dans le signal à l'écho compensé est basée sur les distances déterminées dans chaque sous-bande de la bande prédéterminée de sous-bandes.

2. Procédé selon la revendication 1, comprenant en outre l'étape consistant à estimer le spectre de densité de puissance du bruit de fond présent dans le signal de microphone ;
    et dans lequel l'étape consistant à lisser en fréquence les signaux de microphone en sous-bandes comprend un filtrage récursif du spectre de densité de puissance des signaux de microphone en sous-bandes, afin d'obtenir un spectre de densité de puissance lissé des signaux de microphone en sous-bandes ;
    l'étape consistant à lisser en fréquence les signaux d'écho en sous-bandes estimés comprend un filtrage récursif du spectre de densité de puissance des signaux d'écho en sous-bandes estimés afin d'obtenir un spectre de densité de puissance lissé des signaux d'écho en sous-bandes estimés ;
    et dans lequel l'étape consistant à déterminer dans chaque sous-bande une distance entre les signaux de microphone en sous-bandes lissés et les signaux d'écho en sous-bandes lissés comprend
    la détermination dans chaque sous-bande du maximum du spectre de densité de puissance lissé des signaux de microphone en sous-bandes et du spectre de puissance de bruit de fond estimé, augmenté d'un premier facteur prédéterminé de surestimation du bruit, afin d'obtenir un spectre de densité de puissance de microphone modifié ;
    la détermination dans chaque sous-bande du maximum du spectre de densité de puissance lissé des signaux d'écho en sous-bandes estimés et du spectre de puissance de bruit de fond estimé, augmenté d'un second facteur prédéterminé de surestimation du bruit, afin d'obtenir un spectre de densité de puissance d'écho modifié ;
    la comparaison du spectre de densité de puissance de microphone modifié et du spectre de densité de puissance d'écho modifié, afin d'obtenir une mesure de distance de spectre ;
    et dans lequel la suppression de l'écho résiduel dans les signaux en sous-bandes à l'écho compensé est basée sur la mesure de distance de spectre.

3. Procédé selon l'une des revendications précédentes, comprenant en outre les étapes consistant à :

    estimer la densité de puissance du signal à l'écho compensé ;
    estimer la densité de puissance de l'écho résiduel ;
    et dans lequel la suppression de l'écho résiduel dans le signal à l'écho compensé est basée sur la densité de puissance estimée du signal à l'écho compensé et la densité de puissance estimée de l'écho résiduel.

4. Procédé selon la revendication 3, dans lequel la suppression de l'écho résiduel dans le signal à l'écho compensé comprend le filtrage du signal à l'écho compensé par un filtre ayant la caractéristique de filtre :

$$G(e^{j\Omega_\mu}, n) = 1 - \beta(n)\frac{\hat{S}_{\varepsilon\varepsilon}(\Omega_\mu, n)}{\hat{S}_{ee}(\Omega_\mu, n)}$$

où la mi-fréquence de la sous-bande $\mu$ est dénotée par $\Omega_\mu$, $\hat{S}_{ee}(\Omega_\mu, n)$ et $\hat{S}_{\varepsilon\varepsilon}(\Omega_\mu, n)$ sont la densité de puissance estimée du signal à l'écho compensé et la densité de puissance estimée de l'écho résiduel, respectivement, n est l'index de temps discret et $\beta(n)$ est un paramètre de filtre dépendant de l'activité vocale détectée.

5. Procédé selon la revendication 3, dans lequel la suppression de l'écho résiduel dans le signal à l'écho compensé comprend le filtrage du signal à l'écho compensé par un filtre ayant la caractéristique de filtre :

$$G(e^{j\Omega_\mu}, n) = \begin{cases} 1 - \beta(n)\dfrac{\hat{S}_{\varepsilon\varepsilon}(\Omega_\mu, n)}{\hat{S}_{ee}(\Omega_\mu, n)}, & si\ \overline{C}(n) > C_{\text{thres}} \\[4mm] 1 - \beta(n)\dfrac{\max\left\{\hat{S}_{\varepsilon\varepsilon}(\Omega_\mu, n), \left|\hat{D}(e^{j\Omega_\mu}, n)\right|^2\right\}}{\hat{S}_{\varepsilon\varepsilon}(\Omega_\mu, n)}, \end{cases}$$

sinon
ou

$$G(e^{j\Omega_\mu}, n) = \begin{cases} 1 - \beta(n)\dfrac{\hat{S}_{\varepsilon\varepsilon}(\Omega_\mu, n)}{\hat{S}_{ee}(\Omega_\mu, n)}, & si\ \overline{C}(n) > C_{\text{thres}} \\[4mm] 1 - \beta(n)\dfrac{\left|\hat{D}(e^{j\Omega_\mu}, n)\right|^2}{\hat{S}_{\varepsilon\varepsilon}(\Omega_\mu, n)}, & \text{sinon} \end{cases}$$

où $\overline{C}(n)$ est une mesure de l'activité vocale détectée et $C_{\text{thres}}$ est un seuil prédéterminé.

6. Procédé selon la revendication 4 ou 5, dans lequel la caractéristique de filtre est limitée par max[$G_{\text{mi}}$,, $G(e^{j\Omega_\mu}, n)$], où $G_{\text{min}}$ correspond à un degré prédéterminé de suppression.

7. Procédé selon l'une des revendications précédentes, comprenant en outre les étapes consistant à :

déterminer la densité de puissance du signal de sortie et du bruit de fond présent dans le signal de microphone ;
comparer la densité de puissance du signal de sortie avec la densité de puissance du bruit de fond ; et
transmettre le signal de sortie à un utilisateur éloigné, si la densité de puissance du signal de sortie excède la densité de puissance du bruit de fond, ou
transmettre un bruit artificiel à l'utilisateur éloigné, si la densité de puissance du bruit de fond excède la densité de puissance du signal de sortie.

8. Procédé de réduction d'un écho pour un signal de microphone généré par un microphone (1), ledit procédé comprenant les étapes consistant à :

compenser l'écho du signal de microphone en soustrayant un signal d'écho estimé du signal de microphone, afin de générer un signal à l'écho compensé ;

détecter une activité vocale d'un locuteur local sur la base du signal de microphone et du signal d'écho estimé ; et

supprimer un écho résiduel dans le signal à l'écho compensé sur la base de l'activité vocale détectée afin d'obtenir un signal de sortie ;

dans lequel le signal de microphone est converti en des signaux de microphone transformés par transformation de Fourier et le signal d'écho estimé comprend des signaux d'écho transformés par transformation de Fourier estimés, et, dans lequel les étapes de compensation d'écho, de détection de l'activité vocale et de suppression de l'écho résiduel sont exécutées dans le régime de Fourier et dans lequel la détection de l'activité vocale du locuteur local comprend les étapes consistant à :

lisser en fréquence les signaux de microphone transformés par transformation de Fourier, en particulier par filtrage récursif du premier ordre ;

lisser en fréquence les signaux de microphone d'écho transformés par transformation de Fourier estimés, en particulier par filtrage récursif du premier ordre ;

déterminer, pour chaque composante de Fourier d'une bande prédéterminée de composantes de Fourier, une distance entre les signaux de microphone transformés par transformation de Fourier lissés et les signaux d'écho transformés par transformation de Fourier estimés et lissés ;

et dans lequel la suppression de l'écho résiduel dans le signal à l'écho compensé est basée sur les distances déterminées dans chaque composante de Fourier de la bande prédéterminée de composantes de Fourier.

9. Produit de programme informatique, comprenant un ou plusieurs supports lisibles par ordinateur ayant des instructions exécutables sur un ordinateur pour exécuter les étapes du procédé selon l'une des revendications 1 à 8.

10. Système de traitement de signal de microphone généré par un microphone (1), comprenant :

des moyens de filtrage à compensation d'écho (5) configurés pour recevoir et compenser l'écho du signal de microphone, afin de fournir en sortie un signal à l'écho compensé sur la base du signal de microphone reçu ;

des moyens de détection d'activité vocale configurés pour détecter une activité vocale d'un locuteur local en recevant et analysant le signal à l'écho compensé et pour fournir en sortie un signal de détection ;

des moyens de suppression d'écho résiduel (6) configurés pour recevoir le signal de détection et pour recevoir et filtrer le signal à l'écho compensé sur la base du signal de détection, afin de fournir en sortie un signal de sortie ;

des bancs de filtre (3, 4) configurés pour convertir le signal de microphone et un autre signal audio devant être fourni en sortie par au moins un haut-parleur (2) installé dans la même pièce que le microphone (1) ;

des moyens d'estimation de bruit de fond (7) configurés pour estimer le spectre de puissance du bruit de fond présent dans le signal de microphone, et dans lequel les moyens de détection d'activité vocale comprennent :

des moyens de filtrage récursif configurés pour lisser le spectre de densité de puissance des signaux de microphone en sous-bandes, afin d'obtenir un spectre de densité de puissance lissé des signaux de microphone en sous-bandes ;

des moyens de filtrage récursif configurés pour lisser le spectre de densité de puissance de signaux d'écho en sous-bandes estimés, afin d'obtenir un spectre de densité de puissance lissé des signaux d'écho en sous-bandes estimés ;

des moyens de détermination configurés pour déterminer dans chaque sous-bande le maximum du spectre de densité de puissance lissé des signaux de microphone en sous-bandes et du spectre de puissance du bruit de fond estimé, augmenté par un facteur prédéterminé de surestimation du bruit, et pour générer un spectre de densité de puissance de microphone modifié des valeurs maximum déterminées ;

des moyens de détermination configurés pour déterminer dans chaque sous-bande le maximum du spectre de densité de puissance lissé des signaux d'écho en sous-bandes estimés et du spectre de puissance de bruit de fond estimé, augmenté par le facteur prédéterminé de surestimation du bruit, et pour générer un spectre de densité de puissance d'écho modifié des valeurs maximum déterminées ; et

des moyens de comparaison configurés pour comparer le spectre de densité de puissance de microphone modifié et le spectre de densité de puissance d'écho modifié et pour générer un signal de distance de spectre ;

et dans lequel les moyens de suppression d'écho résiduel (6) sont configurés pour recevoir le signal de distance de spectre et pour recevoir et filtrer le signal à écho compensé sur la base du signal de distance de spectre.

11. Système selon la revendication 10, dans lequel les moyens de détection d'activité vocale sont configurés pour estimer la densité de puissance du signal à écho compensé et la densité de puissance d'un écho résiduel présent dans le signal à écho compensé ;

et dans lequel les moyens de suppression d'écho résiduel (6) sont configurés pour supprimer l'écho résiduel dans le signal à écho compensé sur la base de la densité de puissance estimée du signal à l'écho compensé et la densité de puissance estimée de l'écho résiduel.

**12.** Système selon la revendication 10 ou 11, dans lequel les moyens de suppression d'écho résiduel (6) comprennent des moyens de filtrage ayant la caractéristique de filtre :

$$G(e^{j\Omega_\mu}, n) = 1 - \beta(n)\frac{\hat{S}_{\varepsilon\varepsilon}(\Omega_\mu, n)}{\hat{S}_{ee}(\Omega_\mu, n)}$$

où la mi-fréquence de la sous-bande $\mu$ est dénotée par $\Omega_\mu$, $\hat{S}_{ee}(\Omega_\mu, n)$, $\hat{S}_{\varepsilon\varepsilon}(\Omega_\mu, n)$ sont la densité de puissance estimée du signal à écho compensé et la densité de puissance estimée de l'écho résiduel, n est l'index de temps discret et $\beta(n)$ est un paramètre de filtre dépendant de l'activité vocale détectée.

**13.** Système selon l'une des revendications 10 à 12, dans lequel les moyens de suppression d'écho résiduel (6) comprennent des moyens de filtrage ayant la caractéristique de filtre :

$$G(e^{j\Omega_\mu}, n) = \begin{cases} 1 - \beta(n)\dfrac{\hat{S}_{\varepsilon\varepsilon}(\Omega_\mu, n)}{\hat{S}_{ee}(\Omega_\mu, n)}, & \text{si } \overline{C}(n) > C_{\text{thres}} \\[2em] 1 - \beta(n)\dfrac{\max\left\{\hat{S}_{\varepsilon\varepsilon}(\Omega_\mu, n), \left|\hat{D}(e^{j\Omega_\mu}, n)\right|^2\right\}}{\hat{S}_{\varepsilon\varepsilon}(\Omega_\mu, n)}, \end{cases}$$

sinon
ou

$$G(e^{j\Omega_\mu}, n) = \begin{cases} 1 - \beta(n)\dfrac{\hat{S}_{\varepsilon\varepsilon}(\Omega_\mu, n)}{\hat{S}_{ee}(\Omega_\mu, n)}, & \text{si } \overline{C}(n) > C_{\text{thres}} \\[2em] 1 - \beta(n)\dfrac{\left|\hat{D}(e^{j\Omega_\mu}, n)\right|^2}{\hat{S}_{\varepsilon\varepsilon}(\Omega_\mu, n)}, & \text{sinon} \end{cases}$$

où $\overline{C}(n)$ est une mesure de l'activité vocale détectée et $C_{\text{thres}}$ est un seuil prédéterminé.

**14.** Système selon l'une des revendications 10 à 13, comprenant en outre :

un générateur de bruit (15) configuré pour générer un bruit artificiel ;
des moyens configurés pour déterminer la densité de puissance du signal de sortie et du bruit de fond présent dans le signal de microphone ;
des moyens configurés pour comparer la densité de puissance du signal de sortie avec la densité de puissance du bruit de fond ; et

des moyens de commande configurés pour entraîner une transmission du signal de sortir à un utilisateur éloigné, si la densité de puissance du signal de sortie excède la densité de puissance du bruit de fond, et pour entraîner une transmission du bruit artificiel généré, si la densité de puissance du bruit de fond excède la densité de puissance du signal de sortie.

15. Système de traitement d'un signal de microphone généré par un microphone (1), ledit système comprenant :

des moyens de filtrage à compensation d'écho (5) configurés pour recevoir et compenser un écho du signal de microphone, afin de fournir en sortie un signal à écho compensé, sur la base du signal de microphone reçu ;

des moyens de détection d'activité vocale configurés pour détecter une activité vocale d'un locuteur local en recevant et analysant le signal à l'écho compensé et pour fournir en sortie un signal de détection ;

des moyens de suppression d'écho résiduel (6) configurés pour recevoir le signal de détection et pour recevoir et filtrer le signal à l'écho compensé sur la base du signal de détection, afin de fournir en sortie un signal de sortie ;

des moyens de transformation de Fourier configurés pour effectuer une transformation de Fourier du signal de microphone et d'un audio signal audio devant être fourni en sortie par au moins un haut-parleur (2) installé dans la même pièce que le microphone (1) ;

des moyens d'estimation de bruit de fond (7) configurés pour estimer le spectre de puissance de bruit de fond du bruit de fond présent dans le signal de microphone, et dans lequel les moyens de détection d'activité vocale comprennent :

des moyens de filtrage récursif configurés pour lisser le spectre de densité de puissance des signaux de microphone transformés par transformation de Fourier, afin d'obtenir un spectre de densité de puissance lissé des signaux transformés par transformation de Fourier ;

des moyens de filtrage récursif configurés pour lisser le spectre de densité de puissance des signaux d'écho transformés par transformation de Fourier estimés, afin d'obtenir un spectre de densité de puissance lissé des signaux d'écho transformés par transformation de Fourier estimés ;

des moyens de détermination configurés pour déterminer dans chaque composante de Fourier le maximum du spectre de densité de puissance lissé des signaux de microphone transformés par transformation de Fourier et du spectre de puissance du bruit de fond estimé, augmenté par un facteur prédéterminé de surestimation de bruit, et pour générer un spectre de densité de puissance de microphone modifié des valeurs maximum déterminées ;

des moyens de détermination configurés pour déterminer dans chaque composante de Fourier le maximum du spectre de densité de puissance lissé des signaux d'écho transformés par transformation de Fourier estimés et du spectre de puissance de bruit de fond estimé, augmenté par le facteur prédéterminé de surestimation de bruit, et pour générer un spectre de densité de puissance d'écho modifié des valeurs maximum déterminées ; et

des moyens de comparaison configurés pour comparer le spectre de densité de puissance de microphone modifié et le spectre de densité de puissance d'écho modifié et pour générer un signal de distance de spectre ;

et dans lequel les moyens de suppression d'écho résiduel (6) sont configurés pour recevoir le signal de distance de spectre et pour recevoir et filtrer le signal à écho compensé sur la base du signal de distance de spectre.

16. Kit téléphone mains libres comprenant le système selon l'une des revendications 10 à 15.

17. Système de communication de véhicule, comprenant au moins un microphone (1), au moins un haut-parleur (2) et le système selon l'une des revendications 10 à 15 ou le kit téléphone mains libres selon la revendication 16.

18. Système de reconnaissance vocale ou système de dialogue vocal comprenant le système selon l'une des revendications 10 à 15.

x(n)　　　　　　　　　　　　　　　x(n)

LRM System

filterbank —3

$X(e^{j\Omega_\mu},n)$

echo
compensation

—5

$\hat{H}(e^{j\Omega_\mu},n)$

—2

local
speaker

d(n)　　s(n)

b(n)

—1　local
backround noise

$\hat{D}(e^{j\Omega_\mu},n)$

6

synthesizing
filterbank

$G(e^{j\Omega_\mu},n)$

4

filterbank

$\hat{S}(e^{j\Omega_\mu},n)$　　$E(e^{j\Omega_\mu},n)$　　$Y(e^{j\Omega_\mu},n)$　　y(n)

FIG. 1

EP 1 855 456 B1

FIG. 2

EP 1 855 456 B1

$E(e^{j\Omega_\mu},n)$

$\hat{S}(e^{j\Omega_\mu},n)$

$G_{mod}(e^{j\Omega_\mu},n)$

6

$X(e^{j\Omega_\mu},n)$

residual
echo suppresion

$\hat{D}(e^{j\Omega_\mu},n)$

13

$\hat{D}(e^{j\Omega_\mu},n)$

$Y(e^{j\Omega_\mu},n)$

detect local
speech activity

determine
β-parameter

β(n)

noise
estimation

C(n)

14

7

15

noise
generator

$B(e^{j\Omega_\mu},n)$

$\hat{S}_{bb}(\Omega_\mu,n)$

FIG. 3

FIG. 4

**EP 1 855 456 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20040018860 A1

**Non-patent literature cited in the description**

- **E. HÄNSLER ; G. SCHMIDT.** Acoustic Echo and Noise Control. John Wiley & Sons, 2004
- **R. MARTIN.** An Efficient Algorithm to Estimate the Instantaneous SNR of Speech Signals. *EUROSPEECH 1993,* September 1993, 1093-1096
- **G. SCHMIDT.** Step-Size Control in Subband Echo Cancellation Systems. *IWANEC 1999,* 1999, 116-119